# EUROPEAN PATENT SPECIFICATION

(11) **EP 3 754 886 B1**
(45) Date of publication and mention of the grant of the patent: **27.05.2026**
(21) Application number: 19784889.8
(22) Date of filing: 10.04.2019
(51) Int. Cl.: H04L 5/00, H04B 7/06, H04W 52/16, H04W 52/24, H04W 52/42, H04W 52/46, H04W 84/04, H04B 7/155, H04W 16/26

(54) **METHODS AND SYSTEM FOR TRANSMITTING A REFERENCE SIGNAL**
VERFAHREN UND SYSTEM ZUR ÜBERTRAGUNG EINES REFERENZSIGNALS
PROCÉDÉS ET SYSTÈME POUR LA TRANSMISSION D'UN SIGNAL DE RÉFÉRENCE

(30) Priority: 11.04.2018 CN 201810321575
(43) Date of publication of application: 23.12.2020
(73) Proprietor: HUAWEI TECHNOLOGIES CO., LTD., Shenzhen, Guangdong 518129 (CN)
(72) Inventor: LIU, Fengwei, Shenzhen, Guangdong 518129 (CN); CHEN, Lei, Shenzhen, Guangdong 518129 (CN)
(74) Representative: Epping - Hermann - Fischer
(86) International application number: PCT/CN2019/082081
(87) International publication number: WO 2019/196870

(56) References cited:
- WO-A1-2012/116568
- CN-A- 102 170 334
- CN-A- 103 326 761
- CN-A- 105 359 427
- US-A1- 2012 051 319
- HUAWEI ET AL: "Consideration on IAB physical layer enhancement", vol. RAN WG1, no. Reno, USA; 20171127 - 20171201, 18 November 2017 (2017-11-18), XP051370072, Retrieved from the Internet <URL:http://www.3gpp.org/ftp/tsg%5Fran/WG1%5FRL1/TSGR1%5F91/Docs/> [retrieved on 20171118]
- NOKIA ET AL: "On Cross-link Interference Management in IAB", vol. RAN WG1, no. Sanya, P.R. China; 20180416 - 20180420, 7 April 2018 (2018-04-07), XP051414021, Retrieved from the Internet <URL:http://www.3gpp.org/ftp/tsg%5Fran/WG1%5FRL1/TSGR1%5F92b/Docs/> [retrieved on 20180407]

## Description

### TECHNICAL FIELD

This application relates to the field of communications technologies, and in particular, to a reference signal transmission method and apparatus.

### BACKGROUND

With continuous development of mobile communications technologies, spectrum resources have become scarcer. A spectrum that has not been allocated currently and that can be used for wireless communication is very limited. To improve spectrum utilization, base stations will be deployed more densely in the future. Due to the deployment of dense base stations, backhaul links of the base stations are required to have corresponding transmission capabilities. Deployment costs of optical fibers are relatively high. This undoubtedly increases deployment costs of wireless base stations in the future. Therefore, a wireless relay technology can be used to well resolve a problem of deployment of dense base stations in the future. To be specific, one or more relay nodes (RN) are added between a base station and user equipment, to forward a wireless signal once or more times.

In a common deployment scenario, isolation between a transmit antenna of a relay node and a receive antenna of the relay node is relatively poor. Therefore, the relay node has a half-duplex constraint. To be specific, when receiving a downlink backhaul link of an upper node, the relay node cannot send a downlink access (or backhaul) link to a lower node; or when sending an uplink backhaul link to an upper node, the relay node cannot receive an uplink access (or backhaul) link from a lower node.

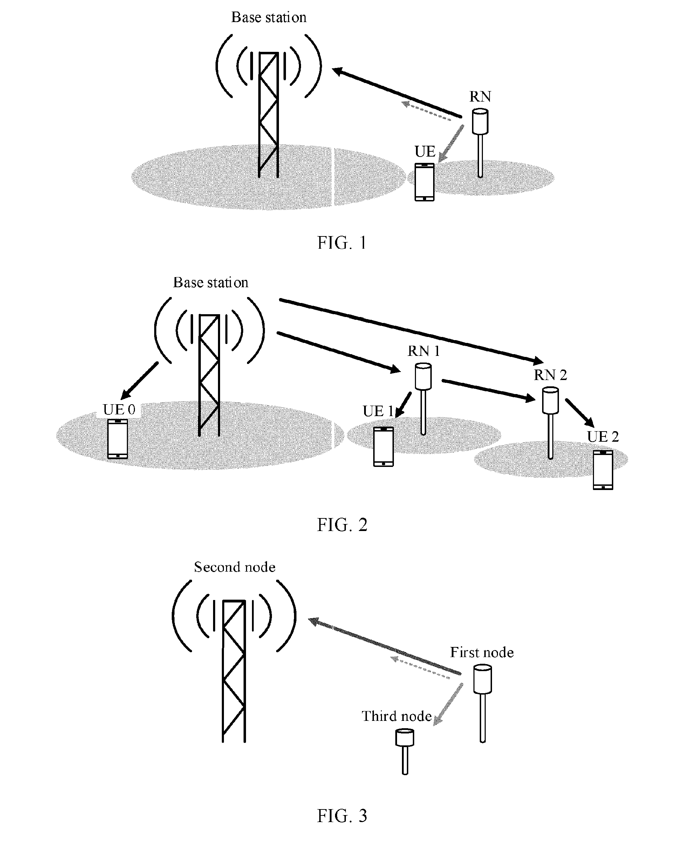

Under the half-duplex constraint, a method for improving spectral efficiency is to use a space division multiple access (SDMA) scheme. To be specific, when receiving a downlink backhaul link from an upper node, the relay node simultaneously receives an uplink access (or backhaul) link from a lower node; or when sending an uplink backhaul link to an upper node, the relay node sends a downlink access (or backhaul) link to a lower node simultaneously. For example, in a communications system shown in FIG. 1, an RN may transmit data to a base station and user equipment (UE) simultaneously. It can be learned from FIG. 1 that, for the relay node, a process of data transmission on a downlink access link causes interference to a process of data transmission on an uplink access link. Because data transmission on the downlink access link is scheduled by the relay node, it is difficult for the base station to obtain specific scheduling information of the downlink access link. Therefore, it is difficult for the base station to learn of the interference from the downlink access link to the uplink backhaul link.
Document WO 2012 / 116 568 A1 describes a a method for sending a sounding reference signal on a backhaul link. A SC-FDMA symbol can be configured and indicated by the network side. Further, a relay node, RN, can transmit, on the SC-FDMA symbol an uplink subframe of a backhaul link, a sounding reference signal, SRS, to the network side.

### SUMMARY

The invention is set out in the appended claims. Embodiments of this application provide a reference signal transmission method and apparatus, so that a relay node transmits a reference signal to a base station. Therefore, the base station learns of, based on channel measurement of the reference signal, interference from a downlink access link to an uplink backhaul link. The present invention is defined by the attached set of claims.

According to a first aspect, an embodiment of this application provides a reference signal transmission method. The method includes the following steps.

A first node receives a first configuration message sent by a second node. The first configuration message carries information about a resource for transmitting a first reference signal.

The first node sends the first reference signal through a first port based on the first configuration message.

The first node sends a first data signal to a third node through a second port.

The first port and the second port are a same port or have an antenna port quasi co-location QCL relationship, the first node is a relay node, and the second node is an upper node of the first node.

According to the foregoing solution, the first port through which the first node sends the first reference signal to the second node and the second port through which the first node transmits the first data signal to the third node are the same port or meet the antenna port QCL relationship. Therefore, the first node sends the first reference signal through the first port. To be specific, a situation in which the first node transmits data to the third node through the second port when the
first node transmits the data to the second node and the third node simultaneously (where for example, the first node transmits the data to the second node and the third node simultaneously in SDMA mode) may be simulated. The second node performs the channel measurement on the received first reference signal, to determine interference caused by the first data signal subsequently transmitted by the first node to the third node to a data signal (which is referred to as a fourth data signal below) transmitted by the first node to the second node. Therefore, the second node may configure an uplink transmission parameter such as an MCS for the first node based on a channel measurement result of the first reference signal; and the first node may send the fourth data signal to the second node based on the configured uplink transmission parameter, and send the first data signal to the third node through the second port. Because the interference from the first data signal to the fourth data signal has been considered in the uplink transmission parameter configured by the second node for the first node, the first node sends the first data signal while sending the fourth data signal based on the uplink transmission parameter configured by the second node. This not only can improve spectral efficiency, but also reduce a block error rate of uplink data transmission.

It should be noted that, in the method provided in the first aspect, the second node may determine, based on the channel measurement result of the first reference signal, the interference from the data signal transmitted by the first node to the third node to the data signal transmitted by the first node to the second node. In other words, the second node is configured to determine interference from a link between the first node and the third node to a link between the first node and the second node. In this embodiment of this application, the second node is the upper node of the first node. Therefore, a link from the first node to the second node may be referred to as a backhaul link. In addition, the third node may be an upper node of the first node, or may be a lower node of the first node. Therefore, the link between the first node and the third node may be a backhaul link or an access link. When the third node is an upper node of the first node, according to the solution provided in this embodiment of this application, the interference from the backhaul link between the first node and the third node to the backhaul link between the first node and the second node may be determined. When the third node is a lower node of the first node, according to the solution provided in this embodiment of this application, the interference from the access link between the first node and the third node to the backhaul link between the first node and the second node may be determined.

In the method provided in the first aspect, the first reference signal may be a sounding reference signal SRS.

When the first reference signal is an SRS, the second node may determine, based on the channel measurement result of the SRS, the interference from the first data signal to the fourth data signal.

It should be noted that the second node may use different processing manners based on different channel measurement results of the first reference signal by the second node. Correspondingly, the first node may also use different processing manners. That the first node sends the first data signal to the third node is only one of the processing manners. In this processing manner, the second node determines an uplink transmission parameter of the fourth data signal based on the channel measurement result of the first reference signal, and notifies the first node by using scheduling signaling. The first node sends the fourth data signal to the second node according to the scheduling signaling, and simultaneously sends the first data signal to the third node through the second port. The scheduling signaling is usually sent by using DCI.

For example, in addition to the foregoing processing manner, after performing the channel measurement on the first reference signal, the second node may alternatively send a first indication message to the first node, to indicate the first node not to communicate with the third node in a first spatial multiplexing slot for transmitting the first data signal. In this case, after receiving the first indication message, the first node does not send the first data signal to the third node in the first spatial multiplexing slot, avoiding relatively strong interference from the sent first data signal to uplink data transmission of the first node. This avoids deterioration of block error rate performance of an uplink backhaul link of the first node. The first indication message may be sent by using DCI.

The first spatial multiplexing slot is a slot in which the first node can transmit the data to the second node and the third node simultaneously. In other words, in this embodiment of this application, a slot used by the first node to transmit the fourth data signal to the second node may be multiplexed to the third node. The first node may send the first data signal to the third node in the slot, and the slot is the first spatial multiplexing slot.

For example, in addition to the foregoing processing manner, after performing the channel measurement on the first reference signal, the second node may alternatively send a third indication message to the first node, to indicate the first node not to communicate with the third node. In this processing manner, the interference from the first data signal to the fourth data signal is stronger, and the second node directly rejects, based on the interference, a possibility that the third node communicates with the first node, to prevent communication between the first node and the third node from causing relatively strong interference to an uplink backhaul link between the first node and the second node. In addition to DCI, the third indication message may alternatively be sent by using a MAC CE or RRC signaling.

In a possible design, a transmit power of the first reference signal is the same as a transmit power of the first data signal; or a difference between a transmit power of the first reference signal and a transmit power of the first data signal is a specified value.

When the second node performs the channel measurement on the first reference signal, if the transmit power of the first reference signal is the same as the transmit power of the first data signal, the interference that is from the first data signal to the fourth data signal and determined by the second node based on the channel measurement result of the first reference signal is more accurate. Certainly, if the transmit power of the first reference signal is different from the transmit power of the first data signal, when obtaining the difference between the transmit power of the first reference signal and the transmit power of the first data signal, the second node may also accurately determine the interference from the first data signal to the fourth data signal.

In a possible design, the first configuration message is further used to indicate a correspondence between the first reference signal and a first spatial multiplexing slot for transmitting the first data signal.

The channel measurement performed on the first reference signal is actually to determine the interference from the first data signal to the fourth data signal when the first node subsequently transmits the data to the second node and the third node simultaneously. In this case, the first node and the second node need to agree on a slot location occupied by the first data signal corresponding to the first reference signal. The first node needs to learn of a slot corresponding to the first reference signal, to determine a transmit parameter of the first reference signal, for example, precoding, and make the transmit parameter of the first reference signal be consistent with a transmit parameter of the first data signal. The second node needs to determine a to-be-measured slot location. To be specific, the second node needs to determine a slot in which the first node can transmit the data to the second node and the third node simultaneously, so that information obtained after the second node performs the channel measurement on the first reference signal may be applied to configuration of an uplink transmission parameter (for example, an MCS) of the slot. In this embodiment of this application, a slot in which the first node transmits the first data signal is referred to as a first spatial multiplexing slot. It can be learned from the foregoing that the correspondence between the first spatial multiplexing slot and the first reference signal needs to be determined.

The correspondence between the first spatial multiplexing slot and the first reference signal may be understood as follows: The first reference signal is used to measure interference from the first data signal to an uplink backhaul link, and therefore, the first reference signal has a correspondence with the first data signal; the first data signal is sent after the first reference signal is sent, the slot (or the slot location) for sending the first data signal also has a correspondence with the first data signal, and the slot is referred to as a first spatial multiplexing slot. Therefore, the first spatial multiplexing slot also has a correspondence with the first reference signal. A subsequent slot (or slot location) to which the measurement result obtained based on the first reference signal is applicable can be learned only after the correspondence is determined.

Certainly, the correspondence between the first spatial multiplexing slot and the first reference signal may be configured by using the first configuration message, or may be configured by using another configuration message. This is not specifically limited in this embodiment of this application.

It is not difficult to understand that the first spatial multiplexing slot for transmitting the first data signal may be configured based on a request of the first node. For example, the first node sends a first request message to the second node, where the first request message is used to request to allocate the first spatial multiplexing slot; the first node receives a second configuration message sent by the second node, where the second configuration message carries indication information of the first spatial multiplexing slot.

In addition, the third node and another node (for example, the fourth node) may communicate with the first node in a multiplexing mode such as frequency division multiplexing, spatial multiplexing, time division multiplexing, or code division multiplexing. In this case, the first reference signal sent by the first node to the second node may be used to measure the interference from the first data signal sent by the first node to the third node to the fourth data signal, and may also be used to measure interference from a data signal sent by the first node to the another node (for example, the fourth node) to the data signal sent by the first node to the second node.

For example, the third node and the fourth node perform data transmission with the first node in frequency division multiplexing mode or spatial multiplexing mode. After the channel measurement is performed on the first reference signal, the first node may send a second data signal to the fourth node through the second port. The first data signal and the second data signal are transmitted in frequency division multiplexing mode or spatial multiplexing mode. In addition, in this implementation, the first reference signal uses frequency-selective precoding.

In this embodiment of this application, the first configuration message may be used to configure a resource of the first reference signal, and may also be used to configure a resource of another reference signal.

In a possible design, the first configuration message carries information about a resource for transmitting a second reference signal. The method further includes: The first node sends the second reference signal through a third port based on the first configuration message; and the first node sends a third data signal to a fifth node through a fourth port. The third port and the fourth port are a same port or have an antenna port QCL relationship.

It should be noted that the information about the resource for the second reference signal may be configured by using the first configuration message, or may be configured by using another configuration message. This is not specifically limited in this embodiment of this application.

In addition, the foregoing solution may also be extended to a scenario of more reference signals. To be specific, the first node may send a plurality of reference signals based on a reference signal resource configured based on the first configuration message, and the second node may separately determine, based on channel measurement results of the plurality of reference signals, interference from data transmitted between a plurality of nodes and the first node to the data transmitted by the first node to the second node.

Similarly, the first configuration message is further used to indicate a correspondence between the second reference signal and a second spatial multiplexing slot for transmitting the third data signal, so that the first node and the second node agree on a slot location occupied by the third data signal corresponding to the second reference signal.

The second spatial multiplexing slot is a slot in which the first node can transmit the data to the second node and the fifth node simultaneously. In other words, in this embodiment of this application, a slot used by the first node to transmit a fifth data signal to the second node may be multiplexed to the fifth node. The first node may send the third data signal to the fifth node in the slot, and the slot is the second spatial multiplexing slot.

The correspondence between the second spatial multiplexing slot and the second reference signal may be understood as follows: The second reference signal is used to measure interference caused by the third data signal to an uplink backhaul link, and therefore, the second reference signal has a correspondence with the third data signal; the third data signal is sent after the second reference signal is sent, the slot (or the slot location) for sending the third data signal also has a correspondence with the third data signal, and the slot is referred to as a second spatial multiplexing slot. Therefore, the second spatial multiplexing slot also has a correspondence with the second reference signal. A subsequent slot (or slot location) to which a measurement result obtained based on the second reference signal is applicable can be learned only after the correspondence is determined.

Similar to the first spatial multiplexing slot, the second spatial multiplexing slot may also be configured by the second node based on a request of the first node. For example, the first node sends a second request message to the second node, where the second request message is used to request to allocate the second spatial multiplexing slot; the first node receives a third configuration message sent by the second node, where the third configuration message carries indication information of the second spatial multiplexing slot.

The second request message and the first request message may be a same message, or may be different messages.

It should be noted that the second node may use different processing manners based on different channel measurement results of the second reference signal by the second node. Correspondingly, the first node may also use different processing manners. That the first node sends the third data signal to the fifth node is only one of the processing manners. In this processing manner, the second node determines an uplink transmission parameter of the fifth data signal based on the channel measurement result of the second reference signal, and notifies the first node by using scheduling signaling. The first node sends the fifth data signal to the second node according to the scheduling signaling, and simultaneously sends the third data signal to the fifth node through the fourth port. The scheduling signaling is usually sent by using DCI.

For example, in addition to the foregoing processing manner, after performing the channel measurement on the second reference signal, the second node may alternatively send a second indication message to the first node, to indicate the first node not to communicate with the fifth node in the second spatial multiplexing slot for transmitting the third data signal. In this case, after receiving the second indication message, the first node does not send the third data signal to the fifth node in the second spatial multiplexing slot, avoiding relatively strong interference from the sent third data signal to uplink data transmission of the first node. This avoids deterioration of block error rate performance of an uplink backhaul link of the first node. The second indication message may be sent by using DCI.

For example, in addition to the foregoing processing manner, after performing the channel measurement on the second reference signal, the second node may alternatively send a fourth indication message to the first node, to indicate the first node not to communicate with the fifth node. In this processing manner, interference from the third data signal to the fifth data signal is stronger, and the second node directly rejects, based on the interference, a possibility that the fifth node communicates with the first node, to prevent communication between the first node and the fifth node from causing relatively strong interference to an uplink backhaul link between the first node and the second node. The fourth indication message may be sent by using DCI, a MAC CE, or RRC signaling.

According to a second aspect, an embodiment of this application provides a reference signal transmission method. The method includes the following steps.

A second node sends a first configuration message to a first node. The first configuration message carries information about a resource for transmitting a first reference signal.

The second node receives the first reference signal sent by the first node through a first port based on the first configuration message. The first port and a second port are a same port or have an antenna port quasi co-location QCL relationship, the second port is a port through which the first node sends a first data signal to a third node, the first node is a relay node, and the second node is an upper node of the first node.

The second node performs channel measurement on the first reference signal.

According to the foregoing solution, the first port through which the first node sends the first reference signal to the second node and the second port through which the first node transmits the first data signal to the third node are the same port or meet the antenna port QCL relationship. Therefore, the first node sends the first reference signal through the first port. To be specific, a situation in which the first node transmits data to the third node through the second port when the first node transmits the data to the second node and the third node simultaneously may be simulated. The second node performs the channel measurement on the received first reference signal, to determine interference caused by the first data signal subsequently transmitted by the first node to the third node to a fourth data signal transmitted by the first node to the second node. Therefore, the second node may configure an uplink transmission parameter such as an MCS for the first node based on a channel measurement result of the first reference signal; and the first node may send the fourth data signal to the second node based on the configured uplink transmission parameter, and send the first data signal to the third node through the second port. Because the interference from the first data signal to the fourth data signal has been considered in the uplink transmission parameter configured by the second node for the first node, the first node sends the first data signal while sending the fourth data signal based on the uplink transmission parameter configured by the second node. This not only can improve spectral efficiency, but also reduce a block error rate of uplink data transmission.

In the method provided in the second aspect, the first reference signal may be a sounding reference signal SRS.

When the first reference signal is an SRS, the second node may determine, based on the channel measurement result of the SRS, the interference from the first data signal to the fourth data signal.

The second node may use different processing manners based on different channel measurement results of the first reference signal by the second node.

For example, the second node may determine an uplink transmission parameter of the fourth data signal based on a channel measurement result of the first reference signal, and notify the first node by using scheduling signaling. The first node sends the fourth data signal to the second node according to the scheduling signaling, and simultaneously sends the first data signal to the third node through the second port. The scheduling signaling is usually sent by using DCI.

For example, after performing the channel measurement on the first reference signal, the second node may alternatively send a first indication message to the first node, to indicate the first node not to communicate with the third node in a first spatial multiplexing slot for transmitting the first data signal. In this case, after receiving the first indication message, the first node does not send the first data signal to the third node in the first spatial multiplexing slot, avoiding relatively strong interference from the sent first data signal to uplink data transmission of the first node. This avoids deterioration of block error rate performance of an uplink backhaul link of the first node. The first indication message may be sent by using DCI.

For example, after performing the channel measurement on the first reference signal, the second node may alternatively send a third indication message to the first node, to indicate the first node not to communicate with the third node. In this processing manner, the interference from the first data signal to the fourth data signal is stronger, and the second node directly rejects, based on the interference, a possibility that the third node communicates with the first node, to prevent communication between the first node and the third node from causing relatively strong interference to an uplink backhaul link between the first node and the second node. The third indication message may be sent by using DCI, a MAC CE, or RRC signaling.

In a possible design, a transmit power of the first reference signal is the same as a transmit power of the first data signal; or a difference between a transmit power of the first reference signal and a transmit power of the first data signal is a specified value.

When the second node performs the channel measurement on the first reference signal, if the transmit power of the first reference signal is the same as the transmit power of the first data signal, the interference that is from the first data signal to the fourth data signal and determined by the second node based on the channel measurement result of the first reference signal is more accurate. Certainly, if the transmit power of the first reference signal is different from the transmit power of the first data signal, when obtaining the difference between the transmit power of the first reference signal and the transmit power of the first data signal, the second node may also accurately determine the interference from the first data signal to the fourth data signal.

In a possible design, the first configuration message is further used to indicate a correspondence between the first reference signal and a first spatial multiplexing slot for transmitting the first data signal.

The channel measurement performed by the second node on the first reference signal is actually to determine the interference from the first data signal to the fourth data signal when the first node subsequently transmits the data to the second node and the third node simultaneously. In this case, the first node and the second node need to agree on a slot location occupied by the first data signal corresponding to the first reference signal. The first node needs to learn of a slot corresponding to the first reference signal, to determine a transmit parameter of the first reference signal, for example, precoding, and make the transmit parameter of the first reference signal be consistent with a transmit parameter of the first data signal. The second node needs to determine a to-be-measured slot location. To be specific, the second node needs to determine a slot in which the first node can transmit the data to the second node and the third node simultaneously, so that information obtained after the second node performs the channel measurement on the first reference signal may be applied to configuration of an uplink transmission parameter (for example, an MCS) of the slot. In this embodiment of this application, a slot in which the first node transmits the first data signal is referred to as a first spatial multiplexing slot. It can be learned from the foregoing that the correspondence between the first spatial multiplexing slot and the first reference signal needs to be determined.

Certainly, the correspondence between the first spatial multiplexing slot and the first reference signal may be configured by using the first configuration message, or may be configured by using another configuration message. This is not specifically limited in this embodiment of this application.

The first spatial multiplexing slot may be allocated by the second node based on a request of the first node. For example, the second node receives a first request message sent by the first node, where the first request message is used to request to allocate the first spatial multiplexing slot; the second node sends a second configuration message to the first node, where the second configuration message carries indication information of the first spatial multiplexing slot.

In addition, the third node and another node (for example, the fourth node) may communicate with the first node in a multiplexing mode such as frequency division multiplexing, spatial multiplexing, time division multiplexing, or code division multiplexing. In this case, the first reference signal received by the second node may be used to measure the interference from the first data signal sent by the first node to the third node to the fourth data signal, and may also be used to measure interference from a second data signal sent by the first node to the another node (for example, the fourth node) to the first data signal sent by the first node to the third node. For example, the third node and the fourth node perform data transmission with the first node in frequency division multiplexing mode or spatial multiplexing mode. In this case, the first data signal and the second data signal are transmitted in frequency division multiplexing mode or spatial multiplexing mode. In addition, the first reference signal uses frequency-selective precoding.

In this embodiment of this application, the first configuration message may be used to configure a resource of the first reference signal, and may also be used to configure a resource of another reference signal.

In a possible design, the first configuration message carries information about a resource for transmitting a second reference signal. The method further includes: The second node receives the second reference signal sent by the first node through a third port based on the first configuration message, where the third port and a fourth port are a same port or have an antenna port quasi co-location QCL relationship, and the fourth port is a port through which the first node sends a third data signal to a fifth node; and the second node performs channel measurement on the second reference signal.

It should be noted that the information about the resource for the second reference signal may be configured by using the first configuration message, or may be configured by using another configuration message. This is not specifically limited in this embodiment of this application.

In addition, the foregoing solution may also be extended to a scenario of more reference signals. To be specific, the first node may send a plurality of reference signals based on a reference signal resource configured based on the first configuration message, and the second node may separately determine, based on channel measurement results of the plurality of reference signals, interference from data transmitted between a plurality of nodes and the first node to the data transmitted by the first node to the second node.

Similarly, the first configuration message may further be used to indicate a correspondence between the second reference signal and a second spatial multiplexing slot for transmitting the third data signal, so that the first node and the second node agree on a slot location occupied by the third data signal corresponding to the second reference signal.

Similar to the first spatial multiplexing slot, the second spatial multiplexing slot may also be configured by the second node based on a request of the first node. For example, the second node receives a second request message sent by the first node, where the second request message is used to request to allocate the second spatial multiplexing slot; the second node sends a third configuration message to the first node, where the third configuration message carries indication information of the second spatial multiplexing slot.

The second request message and the first request message may be a same message, or may be different messages.

It should be noted that the second node may use different processing manners based on different channel measurement results of the second reference signal by the second node.

For example, the second node may determine an uplink transmission parameter of a fifth data signal based on a channel measurement result of the second reference signal, and notify the first node by using scheduling signaling. The first node sends the fifth data signal to the second node according to the scheduling signaling, and simultaneously sends the third data signal to the fifth node through the fourth port. The scheduling signaling is usually sent by using DCI.

For example, after performing the channel measurement on the second reference signal, the second node may alternatively send a second indication message to the first node, to indicate the first node not to communicate with the fifth node in the second spatial multiplexing slot for transmitting the third data signal. The second indication message may be sent by using DCI.

For example, in addition to the foregoing processing manner, after performing the channel measurement on the second reference signal, the second node may alternatively send a fourth indication message to the first node, to indicate the first node not to communicate with the fifth node. The fourth indication message may be sent by using DCI, a MAC CE, or RRC signaling.

According to a third aspect, an embodiment of this application provides a reference signal transmission apparatus. The apparatus includes a receiving module and a sending module.

The receiving module is configured to receive a first configuration message sent by a second node. The first configuration message carries information about a resource for transmitting a first reference signal.

The sending module is configured to send the first reference signal through a first port based on the first configuration message.

The sending module is further configured to send a first data signal to a third node through a second port.

The first port and the second port are a same port or have an antenna port quasi co-location QCL relationship, the apparatus is a relay node, and the second node is an upper node of the apparatus.

In a possible design, the first reference signal is a sounding reference signal SRS.

In a possible design, a transmit power of the first reference signal is the same as a transmit power of the first data signal; or a difference between a transmit power of the first reference signal and a transmit power of the first data signal is a specified value.

In a possible design, the first configuration message is further used to indicate a correspondence between the first reference signal and a first spatial multiplexing slot for transmitting the first data signal.

In a possible design, the first configuration message carries information about a resource for transmitting a second reference signal. The sending module is further configured to: send the second reference signal through a third port based on the first configuration message; and send a third data signal to a fifth node through a fourth port. The third port and the fourth port are a same port or have an antenna port QCL relationship.

In a possible design, the first configuration message is further used to indicate a correspondence between the second reference signal and a second spatial multiplexing slot for transmitting the third data signal.

According to a fourth aspect, an embodiment of this application provides a reference signal transmission apparatus. The apparatus includes a sending module, a receiving module, and a processing module.

The sending module is configured to send a first configuration message to a first node. The first configuration message carries information about a resource for transmitting a first reference signal.

The receiving module is configured to receive the first reference signal sent by the first node through a first port based on the first configuration message. The first port and a second port are a same port or have an antenna port quasi co-location QCL relationship, the second port is a port through which the first node sends a first data signal to a third node, the first node is a relay node, and the apparatus is an upper node of the first node.

The processing module is configured to perform channel measurement on the first reference signal.

In a possible design, the first reference signal is a sounding reference signal SRS.

In a possible design, the first configuration message is further used to indicate a correspondence between the first reference signal and a first spatial multiplexing slot for transmitting the first data signal.

In a possible design, the first configuration message carries information about a resource for transmitting a second reference signal. The receiving module is further configured to: receive the second reference signal sent by the first node through a third port based on the first configuration message, where the third port and a fourth port are a same port or have an antenna port quasi co-location QCL relationship, and the fourth port is a port through which the first node sends a third data signal to a fifth node; and the processing module is further configured to perform channel measurement on the second reference signal.

According to a fifth aspect, an embodiment of this application provides a reference signal transmission apparatus, including a transceiver, a memory, and a processor. The memory is configured to store program code that needs to be executed by the processor. The transceiver is configured to receive and send data between the apparatus and another apparatus (for example, a first node or a second node). The processor is configured to execute the program code stored in the memory, and is specifically configured to perform the method according to any one of the designs in the first aspect and the second aspect.

According to a sixth aspect, an embodiment of this application further provides a computer-readable storage medium, configured to store a computer software instruction used to perform a function according to any one of the first aspect or the second aspect or any one of the designs in the first aspect and the second aspect. The computer software instruction includes a program designed to perform any one of the first aspect or the second aspect or any one of the designs in the first aspect and the second aspect.

According to a seventh aspect, an embodiment of this application provides a computer program product including an instruction. When the computer program product runs on a computer, the computer is enabled to perform the method according to any one of the first aspect or the second aspect or any one of the designs in the first aspect and the second aspect.

According to an eighth aspect, an embodiment of this application provides a chip. The chip is connected to a memory, and is configured to read and execute a software program stored in the memory, to implement the method according to any one of the first aspect or the second aspect or any one of the designs in the first aspect and the second aspect.

According to a ninth aspect, an embodiment of this application provides a chip. The chip includes a processor and a memory. The processor is configured to read a software program stored in the memory, to implement the method according to any one of the first aspect or the second aspect or any one of the designs in the first aspect and the second aspect.

### BRIEF DESCRIPTION OF DRAWINGS

FIG. 1 is a schematic structural diagram of a communications system according to the prior art;
FIG. 2 is a schematic structural diagram of a first communications system according to an embodiment of this application;
FIG. 3 is a schematic structural diagram of a second communications system according to an embodiment of this application;
FIG. 4 is a schematic structural diagram of a third communications system according to an embodiment of this application;
FIG. 5 is a schematic flowchart of a reference signal transmission method according to an embodiment of this application;
FIG. 6 is a schematic diagram of distribution of slots of a first node according to an embodiment of this application;
FIG. 7 is a first schematic diagram of distribution of resources of a first node according to an embodiment of this application;
FIG. 8 is a second schematic diagram of distribution of resources of a first node according to an embodiment of this application;
FIG. 9 is another schematic diagram of distribution of slots of a first node according to an embodiment of this application;
FIG. 10 is a third schematic diagram of distribution of resources of a first node according to an embodiment of this application;
FIG. 11 is a schematic structural diagram of a first reference signal transmission apparatus according to an embodiment of this application;
FIG. 12 is a schematic structural diagram of a second reference signal transmission apparatus according to an embodiment of this application;
FIG. 13 is a schematic structural diagram of a third reference signal transmission apparatus according to an embodiment of this application;
FIG. 14 is a schematic structural diagram of a fourth reference signal transmission apparatus according to an embodiment of this application; and
FIG. 15 is a schematic structural diagram of a fourth communications system according to an embodiment of this application.

### DESCRIPTION OF EMBODIMENTS

First, an application scenario of embodiments of this application is described.

It should be noted that a network architecture and a service scenario described in the embodiments of this application are intended to describe the technical solutions in the embodiments of this application more clearly, and do not constitute a limitation on the technical solutions provided in the embodiments of this application. A person of ordinary skill in the art may know that: With evolution of the network architecture and emergence of a new service scenario, the technical solutions provided in the embodiments of this application are also applicable to similar technical problems.

The embodiments of this application may be applied to a communications system including a relay node. The communications system includes but is not limited to a long term evolution (LTE) system, a long term evolution-advanced (LTE-A) system, a long term evolution-advanced pro (LTE-A-pro), a new radio (NR) system, a communications system such as a 5G system (5th generation system), or may be extended to a cellular system related to standards such as wireless fidelity (Wi-Fi), global microwave interconnection access (worldwide interoperability for microwave access, wimax), and the 3rd generation partnership project (3gpp).

For example, the communications system including the relay node may be shown in FIG. 2. In FIG. 2, a base station may provide services for a relay node RN 1 and a relay node RN 2. User equipment UE 0 may directly establish a communication connection to the base station. User equipment UE 1 may establish a communication connection to the base station via the RN 1. User equipment UE 2 may establish a communication connection to the RN 1 via the RN 2, to establish a communication connection to the base station. In addition, the UE 2 may alternatively establish a connection to the base station via the RN 2.

The base station may be a common base station (for example, a Node B or an eNB), a new radio controller (NR controller), a gNodeB (gNB) in a 5G system, a centralized unit (centralized unit), a new radio base station, a remote radio unit, a micro base station, a distributed unit (distributed unit), a transmission reception point (TRP), a transmission point (TP), or any other radio access device. The embodiments of this application are not limited thereto.

The UE is a device that provides a user with voice and/or data connectivity, for example, a handheld device or vehicle-mounted device that has a wireless connection function. A common terminal includes, for example, a mobile phone, a tablet, a notebook computer, a palmtop computer, a mobile internet device (MID), and a wearable device such as a smartwatch, a smart band, or a pedometer.

The relay node is a network device, and provides a service such as a data connection for user equipment or a lower relay node over a wireless access link. Different from a common network device, the relay node is connected to a donor node over a backhaul link. The donor node may be the base station or an upper relay node. For example, the relay node may be an RN in an LTE network. In the NR, the relay node may be named an rTRP (relay TRP), an IAB node, or the like. In addition, in some scenarios, the user equipment may also be used as a relay node. A relay manner in which an access link and a backhaul link share a frequency band may be referred to as in-band relay, and a relay node that performs an operation in this relay manner may be referred to as an in-band relay node.

Specifically, the embodiments of this application are applied to a communications system including a relay node. The communications system includes at least three nodes: a first node, a second node, and a third node, as shown in FIG. 3. The first node is a relay node, and the second node is an upper node of the first node. The third node may be a lower node of the first node or another upper node of the first node.

An upper node is a node that can provide a service for a lower node and perform control (for example, data scheduling, beam management, or power control) on the lower node. Generally, the upper node is closer to a core network or a control center than the lower node of the upper node. In other words, in a downlink transmission process from the base station to the UE, data usually first passes through the upper node, and then passes through the lower node of the upper node. In some cases, the upper node may also be referred to as an upstream node, and the lower node may also be referred to as a downstream node.

For example, for the communications system shown in FIG. 2, a downlink data transmission path of the base station may be: base station→RN 1→RN 2→UE 2. The base station is an upper node of the RN 1, the RN 1 is an upper node of the RN 2, and the RN 2 is an upper node of the UE 2. The RN 1 is a lower node of the base station, the RN 2 is a lower node of the RN 1, and the UE 2 is a lower node of the RN 2.

For example, for the communications system shown in FIG. 2, a downlink data transmission path of the base station may be: base station→RN 2→UE 2. The base station is an upper node of the RN 2, and the RN 2 is an upper node of the UE 2. The RN 2 is a lower node of the base station, and the UE 2 is a lower node of the RN 2.

For example, for the communications system shown in FIG. 2, a downlink data transmission path of the base station may be: base station→RN 1→UE 1. The base station is an upper node of the RN 1, and the RN 1 is an upper node of the UE 1. The RN 1 is a lower node of the base station, and the UE 1 is a lower node of the RN 1.

It can be learned from the foregoing examples that if a first node is the RN 1 in FIG. 2, a second node may be the base station in FIG. 2, and a third node may be the RN 2 or UE 1 in FIG. 2; if a first node is the RN 2 in FIG. 2, a second node may be the base station or RN 1 in FIG. 2, and a third node may be the UE 2 in FIG. 2.

In addition, it should be noted that, in this embodiment of this application, the third node may be a lower node of the first node or another upper node of the first node. For example, if the first node is the RN 1 in FIG. 2, the third node may be the RN 2 or UE 1 in FIG. 2, or may be another upper node of the RN 1 that is not shown in FIG. 2; if the first node is the RN 2 in FIG. 2, the third node may be the UE 2 in FIG. 2, or may be another upper node of the RN 2 that is not shown in FIG. 2.

It should be noted that, in the communications system shown in FIG. 3, a same spectrum resource may be used when the first node transmits data to the second node and the third node. The first node may transmit the data to the second node while transmitting the data to the third node. For example, the first node transmits data to the second node and the third node simultaneously in SDMA mode. In the foregoing solution in which the first node transmits the data to the second node and the third node simultaneously, no additional spectrum resource is used. Therefore, this solution has advantages such as high spectral efficiency and low deployment costs.

When the foregoing solution is used for data transmission, a data signal transmitted by the first node to the third node (namely, a data signal transmitted on a link indicated by a light gray arrow from the first node to the third node in FIG. 3) causes interference (indicated by a dashed arrow in FIG. 3) to a data signal transmitted by the first node to the second node (namely, a data signal transmitted on a link indicated by a dark gray arrow from the first node to the second node in FIG. 3). Because it is difficult for the second node to learn of specific scheduling information of the data signal transmitted by the first node to the third node, it is difficult for the second node to estimate channel information of the interference. In addition, because the second node needs to configure an uplink transmission parameter for an uplink backhaul link (between the first node and the second node) based on interference to uplink data transmission, accuracy of the uplink transmission parameter configured by the second node is inevitably affected since it is difficult for the second node to accurately obtain the channel information of the interference. Consequently, performance such as a block error rate deteriorates. It should be noted that the uplink transmission parameter includes but is not limited to information such as a modulation and coding scheme (MCS), a transmit power, a quantity of transport streams, and a precoding matrix.

In conclusion, when the first node transmits the data to the second node and the third node simultaneously, it is difficult for the second node to determine the interference from the data signal transmitted by the first node to the third node to the data signal transmitted by the first node to the second node. Consequently, it is difficult for the second node to accurately configure the uplink transmission parameter, such as the MCS, the quantity of transport streams, or the precoding matrix, for the uplink backhaul link.

To make this application more understandable, the following briefly describes a possible interference measurement mechanism of the second node.

Before scheduling the first node to perform uplink transmission, the second node needs to estimate a channel state information parameter, such as a signal to interference plus noise ratio (SINR), of a transmission process, to determine an appropriate uplink transmission parameter, such as a quantity of transport streams, a precoding matrix, or an MCS. The MCS is used as an example. If the MCS is excessively high, block error rate performance of a receiver deteriorates. If the MCS is excessively low, spectral efficiency decreases. Therefore, accurate estimation of the channel state information parameter is one of key factors for ensuring link performance.

In this interference measurement mechanism, a measurement in the channel state information parameter estimation may be divided into two parts: a measurement of an expected channel and a measurement of an interference plus noise. The measurement of the interference plus noise is relatively complex. The expected channel may be a channel from the first node to the second node.

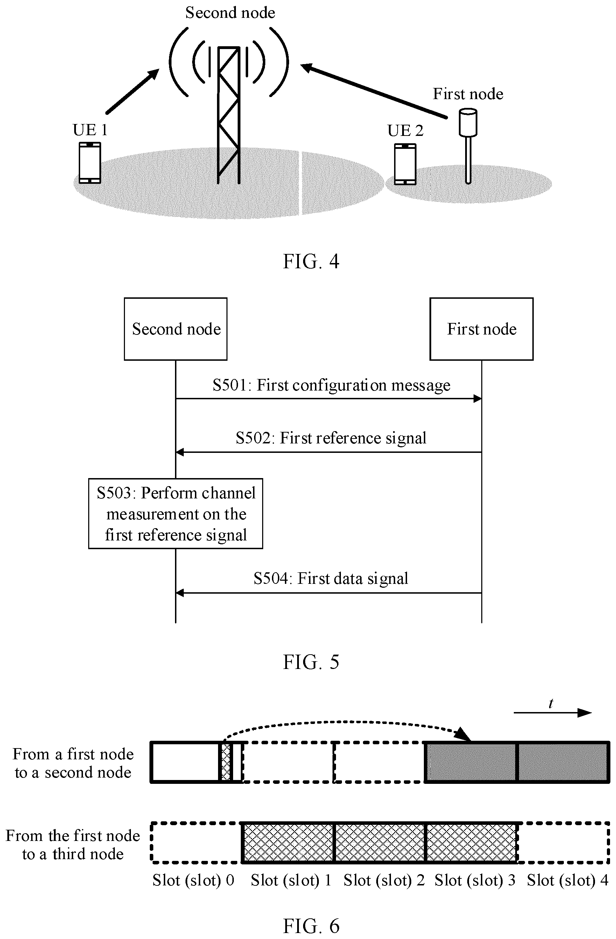

A transmission scenario shown in FIG. 4 is considered. In this scenario, a second node schedules UE 1 in a cell and a first node simultaneously to perform uplink transmission. If only interference to uplink transmission between the second node and the first node is considered, uplink transmission between the UE 1 and the second node may be considered as interference, which is referred to as intra-cell interference. In addition, uplink transmission of a user in another cell also causes interference to the uplink transmission between the second node and the first node, and the interference is referred to as inter-cell interference.

Generally, before scheduling the first node and the UE 1, the second node configures the first node and the UE 1 to transmit sounding reference signals (SRS), which are denoted as an SRS 0 and an SRS 1 respectively. The uplink transmission between the second node and the first node is considered. The second node may measure an uplink channel by using the SRS 0, and measure interference from uplink transmission of the UE 1 to uplink transmission of the first node by using the SRS 1. Due to dynamic scheduling, it is difficult for the second node to predict the inter-cell interference. The second node can measure only an average power of the interference. During actual implementation, the second node may measure the average power of the inter-cell interference at a transmission moment of a physical uplink shared channel (physical uplink share channel, PUSCH).

It can be learned from the foregoing descriptions of the interference measurement mechanism that, when configuring the uplink transmission parameter such as the MCS for the first node, the second node considers only channel measurement, intra-cell interference measurement, and inter-cell interference measurement, and does not consider interference from data transmission between the first node and the third node to data transmission on an uplink backhaul link (between the first node and the second node) when the first node transmits the data to the second node and the third node simultaneously. Therefore, the existing interference measurement mechanism causes problems of low accuracy of the uplink transmission parameter configured by the second node for the first node and deterioration of block error rate performance.

Therefore, the embodiments of this application provide a reference signal transmission method and apparatus, so that a first node transmits a reference signal to a second node, and the second node can determine, based on channel measurement of the reference signal, interference from data transmission between the first node and the third node to data transmission on an uplink backhaul link (between the first node and the second node).

It should be noted that, in the embodiments of this application, the second node may determine, based on channel measurement of a first reference signal, interference from a data signal transmitted by the first node to the third node to a data signal transmitted by the first node to the second node. In other words, the second node is configured to determine interference from a link between the first node and the third node to a link between the first node and the second node. In the embodiments of this application, the second node is the upper node of the first node. Therefore, a link from the first node to the second node may be referred to as a backhaul link. In addition, the third node may be an upper node of the first node, or may be a lower node of the first node. Therefore, the link between the first node and the third node may be a backhaul link or an access link. When the third node is an upper node of the first node, according to the solutions provided in the embodiments of this application, the interference from the backhaul link between the first node and the third node to the backhaul link between the first node and the second node may be determined. When the third node is a lower node of the first node, according to the solutions provided in the embodiments of this application, the interference from the access link between the first node and the third node to the backhaul link between the first node and the second node may be determined.

The following specifically describes the reference signal transmission method provided in the embodiments of this application with reference to the accompanying drawings.

It should be noted that "a plurality of" means "two or more" in this application. In addition, it should be understood that, in descriptions of the embodiments of this application, the words "first", "second", and the like are merely used for distinguishing descriptions, and shall not be understood as an indication or implication of relative importance, or an indication or implication of an order.

FIG. 5 is a schematic flowchart of a reference signal transmission method according to an embodiment of this application. The method includes the following steps:
S501: A first node receives a first configuration message sent by a second node.

The first configuration message carries information about a resource for transmitting a first reference signal. The first node is a relay node, and the second node is an upper node of the first node. The first node may be a base station or an upper relay node of the second node.

Specifically, the first reference signal may be an SRS, or may be another reference signal such as a channel state information reference signal (CSI-RS). In the embodiments of this application, the SRS is mainly used as an example for description, but a possibility that the first reference signal is a reference signal of another type is not excluded.

The information about the resource for transmitting the first reference signal may also be referred to as configuration information of the first reference signal resource. During actual implementation, the configuration information of the first reference signal resource may include at least one of the following: an ID of the first reference signal resource; a quantity of ports of the first reference signal resource; a type of the first reference signal resource, for example, periodic, semi-persistent, or aperiodic; a slot configuration of the first reference signal resource, for example, a slot-level periodicity and an offset configuration; time domain resource information of the first reference signal resource, for example, a start orthogonal frequency division multiplexing (OFDM) symbol or a quantity of repeated symbols; bandwidth information of the first reference signal resource; frequency hopping information of the first reference signal resource; a frequency domain mapping location of the first reference signal resource, for example, a frequency domain start/end location or a frequency domain comb location; sequence information of the first reference signal resource; or spatial relationship information of the first reference signal, where the spatial relationship information may be used to indicate a spatial quasi co-location (QCL) relationship between the first reference signal and another reference signal, and the another reference signal may be a synchronization signal (SS)/physical broadcast channel (PBCH), a channel state information reference signal (CSI-RS), an SRS, or the like. In addition, the second node may further indicate, in the first configurationmessage, a purpose of the first reference signal, for example, beam management, antenna switching, codebook uplink transmission, or non-codebook uplink transmission. The first node selects a proper send mode based on the purpose of the first reference signal. For example, the first node selects a proper SRS precoding matrix, in other words, selects a port for transmitting the first reference signal.

It should be noted that the first reference signal in this embodiment of this application is a reference signal used by the second node to perform interference measurement. Therefore, special attention needs to be paid to two types of information, namely, the purpose of the first reference signal and the spatial relationship information of the first reference signal, in the information about the resource for the first reference signal. The second node may set the purpose of the first reference signal in the first configuration message to "interference measurement", so that the first node can send the first reference signal in this mode in this application (for example, select a proper port for sending the first reference signal). In addition, because a transmit parameter of the first reference signal is determined by the first node, a spatial relationship of the first reference signal in the first configuration message may be not provided.

The information about the resource for the first reference signal is usually configured by using RRC signaling. Certainly, in this embodiment of this application, a possibility that some parameters in the information about the resource may be modified by using other signaling is not excluded. For example, some parameters in the information about the resource may be modified by using a media access control control element (MAC CE).

In addition, when the first reference signal is a periodic signal, the first node may directly send the first reference signal according to the first configuration information; when the first reference signal is a semi-persistent signal, the first node needs to activate or deactivate sending of the first reference signal by using a MAC CE; when the first reference signal is an aperiodic signal, the first node needs to trigger sending of the first reference signal by using downlink control information (DCI) signaling.

S502: The first node sends the first reference signal through a first port based on the first configuration message.

As described above, in this embodiment of this application, the first reference signal sent by the first node to the second node is used for interference measurement. In this case, after receiving the first reference signal sent by the first node in S502, the second node may perform channel measurement on the first reference signal, and then determine, based on a channel measurement result of the first reference signal, interference caused by a data signal subsequently transmitted by the first node to a third node to a data signal transmitted by the first node to the second node.

The third node may be a lower node of the first node or another upper node of the first node. In this embodiment of this application, only the first node is limited to being capable of transmitting data to the second node and the third node simultaneously (where for example, the first node transmits the data to the second node and the third node simultaneously in SDMA mode), and the third node is not specifically limited. To be specific, regardless of whether the third node is an upper node of the first node or a lower node of the first node, as long as the first node can transmit the data to the second node and the third node simultaneously, the data signal transmitted by the first node to the third node interferes with the data signal transmitted by the first node to the second node, and the second node may determine the channel information of the interference based on the channel measurement result of the first reference signal.

It should be understood that, in this embodiment of this application, the action of sending the first reference signal by the first node occurs before the first node transmits the data to the second node and the third node simultaneously. To be specific, before the first node transmits data to the second node and the third node simultaneously, the second node may first determine, based on the channel measurement result of the first reference signal, the interference caused by the data signal subsequently transmitted by the first node to the third node to the data signal transmitted by the first node to the second node. Therefore, when configuring an uplink transmission parameter such as an MCS for the first node, the second node may consider the interference, so that the configured uplink transmission parameter is more accurate. In this case, when subsequently transmitting the data to the second node, the first node may perform transmission based on the more accurate uplink transmission parameter, to improve frequency utilization and reduce a block error rate of an uplink backhaul link.

Specifically, when sending the first reference signal, the first node sends the first reference signal through the first port. Herein, the first port is determined in the following manner: Assuming that the first node transmits the data signal to the third node through a second port when the first node subsequently transmits the data signals to the second node and the third node simultaneously, the first port may be the same as the second port, or may meet an antenna port QCL relationship with the second port. In this embodiment of this application, that two ports are the same means that the two ports use same analog and digital precoding, and when channel variability is ignored, channels corresponding to same ports are the same.

That two antenna ports have a QCL relationship means that a large-scale channel property of a transmission symbol of one antenna port may be derived from a channel of a transmission symbol of the other antenna port. That is, channels corresponding to two antenna ports have a same or similar large-scale channel property. The large-scale channel property includes one or more of a delay spread, a Doppler spread, a Doppler frequency shift, an average gain, an average delay, and a spatial reception parameter. A plurality of QCL relationships, for example, a QCL relationship based on a spatial parameter, namely, QCL-Type D: {Spatial Rx parameter}, are defined in an NR protocol. Transmit signals of two ports having a spatial QCL relationship usually have a same or similar beam transmission direction.

In a possible implementation, the first port and the second port have a QCL relationship. This may specifically mean: A beam direction when the first reference signal is sent is the same as or similar to a beam direction when the first node sends the data signal to the third node.

Based on the foregoing descriptions of the first port and the second port, it is not difficult to understand that the foregoing mentioned spatial relationship of the first reference signal may be not provided because the first node needs to determine the transmit parameter (for example, the beam transmission direction) of the first reference signal based on scheduling of the first node, instead of determining the transmit parameter based on the first configuration message. Therefore, the spatial relationship of the first reference signal may be not provided.

Because the first port and the second port are the same port or meet the antenna port QCL relationship, the first node sends the first reference signal through the first port. In this case, a case in which the first node transmits the data to the third node through the second port may be simulated. By performing the channel measurement on the received first reference signal, the second node may determine the interference caused by the data signal subsequently transmitted by the first node to the third node to the data signal transmitted by the first node to the second node.

S503: The second node performs the channel measurement on the first reference signal.

As described above, by performing the channel measurement on the first reference signal, the second node may determine the interference caused by the data signal (referred to as a first data signal below) subsequently transmitted by the first node to the third node to the data signal (referred to as a fourth data signal below) transmitted by the first node to the second node. Optionally, by performing the channel measurement on the first reference signal, the second node may alternatively determine interference caused by the first data signal to another signal received by the second node.

It is not difficult to understand that, when the second node performs the channel measurement on the first reference signal, if a transmit power of the first reference signal is the same as a transmit power of the first data signal, the interference that is from the first data signal to the fourth data signal and determined by the second node based on the channel measurement result of the first reference signal is more accurate. Certainly, if the transmit power of the first reference signal is different from the transmit power of the first data signal, when obtaining a difference between the transmit power of the first reference signal and the transmit power of the first data signal, the second node may also accurately determine the interference from the first data signal to the fourth data signal.

In other words, the transmit power of the first reference signal may be the same as the transmit power of the first data signal; or the difference between the transmit power of the first reference signal and the transmit power of the first data signal may be a specified value.

During actual implementation, the transmit power of the first reference signal and the transmit power of the first data signal can be configured in the following three manners.

### Manner 1:

The second node may indicate, by using the first configuration message, that the transmit power of the first reference signal is the same as the transmit power of the first data signal, or indicate, by using the first configuration message, that the difference between the transmit power of the first reference signal and the transmit power of the first data signal is the specified value.

### Manner 2:

It may be specified in a protocol that the transmit power of the first reference signal is the same as the transmit power of the first data signal; or it may be specified in a protocol that the difference between the transmit power of the first reference signal and the transmit power of the first data signal is the specified value.

### Manner 3:

The first node may report to the second node that the transmit power of the first reference signal is the same as the transmit power of the first data signal, or the first node may report the difference (namely, the specified value) between the transmit power of the first reference signal and the transmit power of the first data signal to the second node.

As described above, the channel measurement performed on the first reference signal is actually to determine the interference from the subsequent first data signal to the fourth data signal. In this case, the first node and the second node need to agree on a slot location occupied by the first data signal corresponding to the first reference signal. The first node needs to learn of a slot corresponding to the first reference signal, to determine a transmit parameter of the first reference signal, for example, precoding, and make the transmit parameter of the first reference signal be consistent with a transmit parameter of the first data signal. The second node needs to determine a to-be-measured slot location. To be specific, the second node needs to determine a slot in which the first node can transmit the data to the second node and the third node simultaneously, so that information obtained after the second node performs the channel measurement on the first reference signal may be applied to configuration of an uplink transmission parameter (for example, an MCS) of the slot. In this embodiment of this application, a slot in which the first node transmits the first data signal is referred to as a first spatial multiplexing slot. It can be learned from the foregoing that a correspondence between the first spatial multiplexing slot and the first reference signal needs to be determined.

Based on the foregoing descriptions, the correspondence may be understood as follows: The first reference signal is used to measure interference from the first data signal to an uplink backhaul link, and therefore, the first reference signal has a correspondence with the first data signal; the first data signal is sent after the first reference signal is sent, the slot (or the slot location) for sending the first data signal also has a correspondence with the first data signal, and the slot is referred to as a first spatial multiplexing slot. Therefore, the first spatial multiplexing slot also has a correspondence with the first reference signal. A subsequent slot (or slot location) to which the measurement result obtained based on the first reference signal is applicable can be learned only after the correspondence is determined.

For example, as shown in FIG. 6, five slots of the first node are considered, and are respectively a slot 0 to a slot 4. The first node determines, based on an indication of the first configuration message, that the slot 0 is used to send the first reference signal. In addition, the first node may determine, based on the first configuration message or another configuration message, that a slot corresponding to the first reference signal is the slot 3. In this case, when sending the first reference signal, the first node may select a port that is the same as or has a QCL relationship with a port through which the first node transmits the data to the third node in the slot 3. Alternatively, the first node may determine a precoding matrix of the first reference signal and first data signal based on the correspondence between the first reference signal and the slot 3.

The slot (namely, the first spatial multiplexing slot) corresponding to the first reference signal may be indicated in the first configuration message, or may be explicitly or implicitly indicated by using another configuration message.

It should be noted that, in addition to the manner indicated by the foregoing signaling (for example, the first configuration message), the correspondence between the first spatial multiplexing slot and the first reference signal may alternatively use a manner specified in a protocol. For example, it may be specified in the protocol that the first spatial multiplexing slot always corresponds to an Nth slot after the slot for sending the first reference signal, where N is a positive integer greater than or equal to 1. N may be a configurable value.

In a possible implementation, the first node may request the second node to allocate a spatial multiplexing slot, to be specific, request to allocate a slot in which the first node can transmit the data to the second node and the third node simultaneously. Then, the second node configures the first spatial multiplexing slot for the first node, and may simultaneously configure, for the first spatial multiplexing slot, the first reference signal that is used for interference measurement. In this implementation, the first reference signal and the first spatial multiplexing slot are simultaneously configured, and the correspondence between the first reference signal and the first spatial multiplexing slot may be directly obtained.

The first spatial multiplexing slot is a slot in which the first node can transmit the data to the second node and the third node simultaneously. In other words, in this embodiment of this application, a slot used by the first node to transmit the fourth data signal to the second node may be multiplexed to the third node. The first node may send the first data signal to the third node in the slot, and the slot is the first spatial multiplexing slot.

Certainly, the second node may alternatively separately configure the first reference signal and the first spatial multiplexing slot, and then indicate the correspondence between the first reference signal and the first spatial multiplexing slot by using the foregoing signaling or the manner specified in the protocol.

It should be noted that, in this embodiment of this application, a quantity of spatial multiplexing slots that the first node requests to allocate is not limited, and the quantity may be one or more. For example, when determining that the first node and the second node perform data transmission, the first node may simultaneously perform data transmission with the third node. In addition, when determining that the first node and the second node perform data transmission, the first node may also perform data transmission with another node (for example, a fifth node) simultaneously. In this case, the first node may request the second node to allocate two spatial multiplexing slots.

In addition, when requesting to allocate a spatial multiplexing slot, the first node may further report a location of the spatial multiplexing slot that the first node requests to allocate. For example, in FIG. 6, the first node may request to allocate the slot 3 and the slot 4 as spatial multiplexing slots. After receiving the request, the second node may configure the slot 3 and the slot 4 as spatial multiplexing slots, and may configure corresponding reference signals for the slot 3 and the slot 4.

Based on the channel measurement result of the first reference signal by the second node in S503, and with reference to measurement of an uplink channel between the first node and the second node, intra-cell interference measurement, and inter-cell interference measurement, a channel state information parameter, such as an SINR, of uplink data transmission of the first node can be more accurately estimated, so that an uplink transmission parameter configured for the first node is more accurate.

The channel measurement result of the first reference signal in S503 is not always the same. For example, the result of the first reference signal may indicate that the data transmitted between the first node and the third node has relatively weak interference to the data transmitted on an uplink backhaul link (between the first node and the second node), or may indicate that the data transmitted between the first node and the third node has relatively strong interference to the data transmitted on an uplink backhaul link (between the first node and the second node). In this case, based on different measurement results in S503, the second node may use different processing manners. Three processing manners are listed as follows:

### First processing manner:

After step S503 is performed, step S504 is performed.

S504: The first node sends the first data signal to the third node through the second port.

The first port and the second port are a same port or have an antenna port quasi co-location QCL relationship.

In the first processing manner, the second node may determine an uplink transmission parameter of the fourth data signal based on the channel measurement result of the first reference signal, and notifies the first node by using scheduling signaling. The first node sends the fourth data signal to the second node according to the scheduling signaling, and simultaneously sends the first data signal to the third node through the second port in S504. The scheduling signaling is usually sent by using DCI.

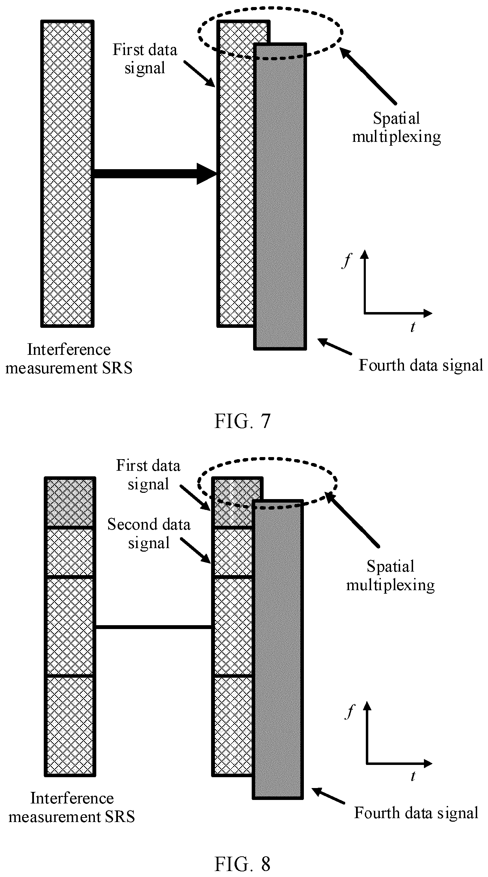

For example, assuming that the third node is a lower node of the first node, in the first processing manner, a schematic diagram of distribution of resources of the first node may be shown in FIG. 7: The first node sends an interference measurement SRS (an example of the first reference signal) based on an SRS resource configured by the second node, and the second node determines, based on channel measurement of the interference measurement SRS, the interference from the first data signal transmitted on a physical downlink shared channel (PDSCH) to the fourth data signal transmitted on a PUSCH. Same analog and digital precoding is used when the interference measurement SRS is sent and the first data signal is transmitted. The first data signal and the fourth data signal are transmitted in spatial multiplexing mode. In other words, the first data signal and the fourth data signal are simultaneously transmitted.

It should be noted that, in FIG. 7, the interference measurement SRS is a specific example of the first reference signal. "interference measurement" indicates that the SRS is used to measure interference from a link from the first node to the third node to a link from the first node to the second node. During specific implementation, the second node may determine, by performing the channel measurement on the interference measurement SRS, the interference from the link from the first node to the third node to the link from the first node to the second node.

The second node usually configures an uplink transmission parameter such as an MCS for uplink data transmission of the first node based on the channel measurement result of the first reference signal; and the first node may send the fourth data signal to the second node based on the configured uplink transmission parameter, and send the first data signal to the third node through the second port. Because the interference from the first data signal to the fourth data signal has been considered in the uplink transmission parameter configured by the second node for the first node, the first node sends the first data signal while sending the fourth data signal based on the configured uplink transmission parameter. This not only can improve spectral efficiency, but also reduce a block error rate of uplink data transmission.

It may be learned from the foregoing descriptions that the first processing manner may be applied to the following scenario: The second node has a capability of enabling the first node to stop sending the first data signal to the third node; and after performing the channel measurement on the first reference signal, the second node determines that if the first node subsequently sends the first data signal and the fourth data signal simultaneously, the interference from the first data signal to the fourth data signal is within an acceptable range. Therefore, the second node configures the uplink transmission parameter for the first node based on the interference; and the first node may send the first data signal to the third node in the first spatial multiplexing slot, and simultaneously send the fourth data signal to the second node based on the configured uplink transmission parameter.

In addition, the first processing manner may also be applied to the following scenario: The second node does not have a capability of enabling the first node to stop sending the first data signal to the third node. Therefore, regardless of the channel measurement result of the first reference signal from the second node, the second node needs to configure the uplink transmission parameter for the first node based on the interference from the first data signal to the fourth data signal; and the first node sends the fourth data signal based on the configured uplink transmission parameter, and simultaneously sends the first data signal to the third node.

### Second processing manner:

After step S503 is performed, the following step is performed: The first node receives a first indication message sent by the second node. The first indication message is used to indicate the first node not to communicate with the third node in the first spatial multiplexing slot for transmitting the first data signal.

The first indication message may be usually sent by using DCI. For example, the first indication message may be carried in scheduling signaling that is of the second node for the fourth data signal and that is for sending. 1 bit may be configured in the scheduling signaling to indicate whether the first node is allowed to transmit the first data signal in the first spatial multiplexing slot. It should be noted that when the scheduling signaling carries the indication information, the scheduling information needs to be sent in advance, in other words, sent before the first spatial multiplexing slot.

In the second processing manner, the second node determines, based on the channel measurement result of the first reference signal, that if the first node subsequently transmits the data signals to the second node and the third node simultaneously, the first data signal transmitted to the third node severely interferes with the fourth data signal transmitted to the second node. In this case, the second node may indicate, by using the first indication message, the first node not to communicate with the third node in the first spatial multiplexing slot, to prevent the first node from sending the first data signal to the third node, preventing the sent first data signal from causing relatively strong interference to the uplink data transmission of the first node. This avoids deterioration of block error rate performance of the uplink backhaul link of the first node.

It may be learned from the foregoing descriptions that the second processing manner may be applied to the following scenario: The second node has a capability of enabling the first node to stop sending the first data signal to the third node; and after performing the channel measurement on the first reference signal, the second node determines that if the first node subsequently sends the first data signal and the fourth data signal simultaneously, the interference from the first data signal to the fourth data signal exceeds an acceptable range. Therefore, the second node indicates, by using the first indication message, the first node not to send the first data signal to the third node in the first spatial multiplexing slot.

### Third processing manner:

After step S503 is performed, the following step is performed: The first node receives a third indication message sent by the second node. The third indication message is used to indicate the first node not to communicate with the third node.

In the third processing manner, the second node determines, based on the channel measurement result of the first reference signal, that if the first node subsequently transmits the data signals to the second node and the third node simultaneously, the first data signal transmitted to the third node severely interferes with the fourth data signal transmitted to the second node. In this case, the second node may indicate, by using the third indication message, the first node not to communicate with the third node.

A difference between the third processing manner and the second processing manner lies in that: In the third processing manner, if the first node subsequently transmits the data signals to the second node and the third node simultaneously, the first data signal causes stronger interference to the fourth data signal, and based on the interference, the second node directly rejects a possibility that the third node communicates with the first node. However, in the second processing manner, only the first node is limited not to communicate with the third node in the first spatial multiplexing slot. Therefore, the communication between the first node and the third node is prevented from causing relatively strong interference to the uplink backhaul link between the first node and the second node. In addition, in the foregoing second processing manner, the first indication message is usually sent by using DCI. In the third processing manner, in addition to DCI, the third indication message may alternatively be sent by using a MAC CE or radio resource control (RRC) signaling.

In addition, in the third processing manner, if an interval between a slot for sending the first reference signal and the first spatial multiplexing slot is relatively small, when receiving the third indication message sent by the second node, the first node may have sent the first data signal to the third node in the first spatial multiplexing slot. In this case, the first node may terminate communication between the first node and the third node according to an indication of the third indication message after receiving the third indication message. Alternatively, to avoid the foregoing case, the third indication message sent by the second node may indicate the first node no longer to communicate with the third node after sending the first data signal to the third node.

With reference to the foregoing descriptions, it may be learned that the third processing manner may be applied to the following scenario: The second node has a capability of enabling the first node to stop sending the first data signal to the third node; and after performing the channel measurement on the first reference signal, the second node determines that if the communication between the first node and the third node severely interferes with the uplink transmission of the first node, the second node indicates, by using the third indication message, the first node not to communicate with the third node.

In a possible implementation, the third node and another node (for example, a fourth node) may communicate with the first node in a multiplexing mode such as frequency division multiplexing, spatial multiplexing, time division multiplexing, or code division multiplexing. In this case, in S502, the first reference signal sent by the first node to the second node may be used to measure the interference from the first data signal sent by the first node to the third node to the fourth data signal, and may also be used to measure interference from a data signal sent by the first node to the another node (for example, the fourth node) to the data signal sent by the first node to the second node.

The fourth node may be a lower node of the first node or another upper node of the first node (excluding the second node and the third node).

For example, the third node and the fourth node perform data transmission with the first node in frequency division multiplexing mode or spatial multiplexing mode. After sending the first reference signal in S502, the first node may send a second data signal to the fourth node through the second port. The first data signal and the second data signal are transmitted in frequency division multiplexing mode or spatial multiplexing mode.

For example, if both the third node and the fourth node are lower nodes of the first node, frequency division multiplexing is used as an example, and a schematic diagram of distribution of resources of the first node may be shown in FIG. 8: The first node sends an interference measurement SRS (an example of the first reference signal) based on an SRS resource configured by the second node. Downlink data of the first node is transmitted in frequency division multiplexing mode. In other words, the first data signal and the second data signal are transmitted in frequency division multiplexing mode. In a same subband, same analog and digital precoding is used when the first node sends the interference measurement SRS and transmits a downlink data signal (the first data signal or second data signal).

For example, in FIG. 8, the first data signal is transmitted in one subband of a PDSCH, and the second data signal is transmitted in another subband of the PDSCH. The first data signal and the second data signal are transmitted in frequency division multiplexing mode. In the subband in which the first data signal is transmitted, same analog and digital precoding is used when the interference measurement SRS is sent and the first data signal is transmitted. In the subband in which the second data signal is transmitted, same analog and digital precoding is used when the interference measurement SRS is sent and the second data signal is transmitted. Therefore, the interference measurement SRS needs to use frequency-selective precoding.

In the implementation shown in FIG. 8, after receiving the first reference signal, the second node may selectively perform channel measurement on the first reference signal in some frequency bands. A measurement result may be used to determine the interference from the data signal sent by the first node to the fourth node to the data signal sent by the first node to the second node, or used to determine the interference from the data signal sent by the first node to the third node to the data signal sent by the first node to the second node.

Similarly, after channel measurement is performed on the first reference signal in some frequency bands, the first node may selectively send the second data signal to the fourth node through the second port, or selectively send the first data signal to the third node through the second port.

In this embodiment of this application, the first configuration message may be used to configure a resource of the first reference signal, and may also be used to configure a resource of another reference signal. To be specific, the first node may send a plurality of reference signals based on a reference signal resource configured based on the first configuration message, and the second node may separately determine, based on channel measurement results of the plurality of reference signals, interference from data transmitted between a plurality of nodes and the first node to the data transmitted by the first node to the second node.

For example, the first configuration message carries information about a resource for transmitting a second reference signal. In this case, the first node may further send the second reference signal through a third port based on the first configuration message; and then the first node sends a third data signal to a fifth node through a fourth port. The third port and the fourth port are a same port or have an antenna port QCL relationship.

The fifth node may be a lower node of the first node or another upper node of the first node (excluding the second node, the third node, and the fourth node). Optionally, the fifth node may alternatively be a node that is the same as the third node, or the fifth node may be a node that is the same as the fourth node. This is not specifically limited in this embodiment of this application.

In addition, the information about the resource for transmitting the second reference signal may be configured by using the first configuration message, or may be configured by using another configuration message. This is not specifically limited in this embodiment of this application.

It can be learned from the foregoing analysis on the first port and the second port that, the third port and the fourth port are the same port or meet the antenna port QCL relationship. This may specifically mean: A beam direction when the second reference signal is sent is the same as or similar to a beam direction when the third data signal is sent. In other words, same analog and digital precoding is used for sending the second reference signal and sending the third data signal.

After receiving the second reference signal, the second node may perform channel measurement on the second reference signal, to determine interference caused by the third data signal to a data signal (which is referred to as a fifth data signal below) transmitted by the first node to the second node when the first node subsequently transmits data to the second node and the fifth node simultaneously. The fifth data signal and the fourth data signal may be a same data signal, or may be different data signals.

In addition, it should be understood that, when the information about the resource for the first reference signal and the information about the resource for the second reference signal are configured by using the first configuration message, two reference signal resources may be configured, or two measurement ports (namely, the first port and the second port) may be configured on one reference signal resource, so that the second node can separately measure interference from data signals transmitted on two links to the data signal transmitted from the first node to the second node.

According to the preceding solution, information about resources for a plurality of reference signals may be configured by using the first configuration message, so that the second node can separately determine, based on channel measurement results of the plurality of reference signals, interference from a plurality of data signals transmitted on a plurality of links to the data signal transmitted from the first node to the second node.

As described above, the channel measurement performed on the second reference signal is actually to determine the interference from the third data signal to the fifth data signal when the first node subsequently transmits the data to the second node and the fifth node simultaneously. In this case, the first node and the second node need to agree on a slot location occupied by the third data signal corresponding to the second reference signal. The first node needs to learn of a slot corresponding to the second reference signal, to determine a transmit parameter of the second reference signal, for example, precoding, and make the transmit parameter of the second reference signal be consistent with a transmit parameter of the third data signal. The second node needs to determine a to-be-measured slot location. To be specific, the second node needs to determine a slot in which the first node can transmit the data to the second node and the fifth node simultaneously, so that information obtained after the second node performs the channel measurement on the second reference signal may be applied to configuration of an uplink transmission parameter of the slot. In this embodiment of this application, a slot in which the first node transmits the third data signal is referred to as a second spatial multiplexing slot. It can be learned from the foregoing that a correspondence between the second spatial multiplexing slot and the second reference signal needs to be determined.

The second spatial multiplexing slot is a slot in which the first node can transmit the data to the second node and the fifth node simultaneously. In other words, in this embodiment of this application, a slot used by the first node to transmit the fifth data signal to the second node may be multiplexed to the fifth node. The first node may send the third data signal to the fifth node in the slot, and the slot is the second spatial multiplexing slot.

Based on the foregoing descriptions, the correspondence between the second spatial multiplexing slot and the second reference signal may be understood as follows: The second reference signal is used to measure interference caused by the third data signal to an uplink backhaul link, and therefore, the second reference signal has a correspondence with the third data signal; the third data signal is sent after the second reference signal is sent, the slot (or the slot location) for sending the third data signal also has a correspondence with the third data signal, and the slot is referred to as a second spatial multiplexing slot. Therefore, the second spatial multiplexing slot also has a correspondence with the second reference signal. A subsequent slot (or slot location) to which a measurement result obtained based on the second reference signal is applicable can be learned only after the correspondence is determined.

The correspondence between the second spatial multiplexing slot and the second reference signal may be indicated by using the first configuration message, or may be explicitly or implicitly indicated by using another configuration message.

It should be noted that both the correspondence between the first spatial multiplexing slot and the first reference signal and the correspondence between the second spatial multiplexing slot and the second reference signal may be indicated by using the first configuration message, or may be separately indicated by using two configuration messages. This is not specifically limited in this embodiment of this application.

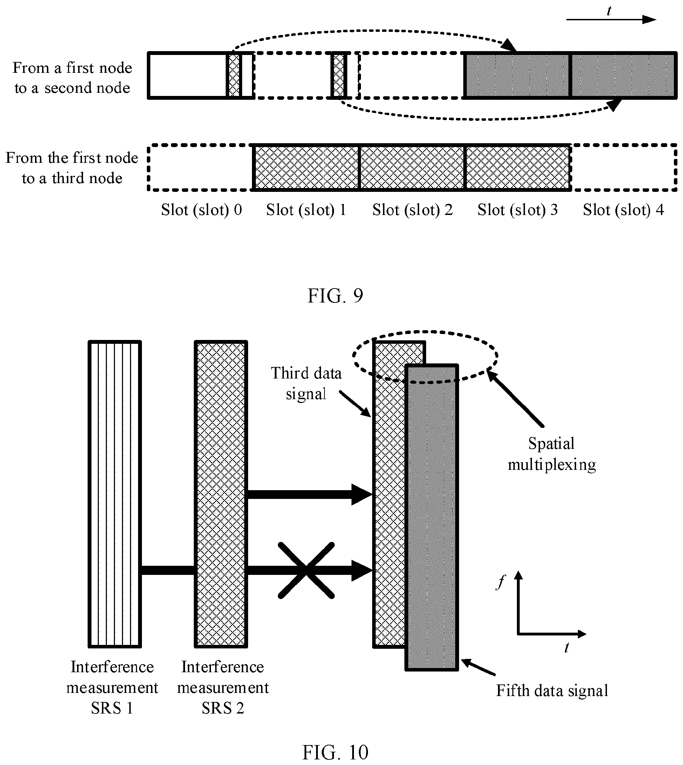

For example, as shown in FIG. 9, five slots of the first node are considered, and are respectively a slot 0 to a slot 4. The first node determines, based on an indication of the first configuration message, that the slot 0 is used to send the first reference signal, and the slot 1 is used to send the second reference signal. The first node may determine, based on the first configuration message or another configuration message, that a slot corresponding to the first reference signal is the slot 3, and a slot corresponding to the second reference signal is the slot 4. In this case, when sending the first reference signal, the first node may select a port that is the same as or has a QCL relationship with a port through which the first node transmits the data to the third node in the slot 3. Alternatively, the first node may determine a precoding matrix of the first reference signal and first data signal based on the correspondence between the first reference signal and the slot 3. When sending the second reference signal, the first node may select a port that is the same as or has a QCL relationship with a port through which the first node transmits the data to the fifth node in the slot 4. Alternatively, the first node may determine a precoding matrix of the second reference signal and third data signal based on the correspondence between the second reference signal and the slot 4.

It should be noted that, in addition to the manner indicated by the foregoing signaling (for example, the first configuration message), the correspondence between the first spatial multiplexing slot and the first reference signal and the correspondence between the second spatial multiplexing slot and the second reference signal may alternatively use a manner specified in a protocol. For example, it may be specified in a protocol that the first spatial multiplexing slot always corresponds to an Nth slot after the slot for sending first reference signal, where N is a positive integer greater than or equal to 1; and the second spatial multiplexing slot always corresponds to an Mth slot after the slot for sending the second reference signal, where M is a positive integer greater than or equal to 1. Both N and M are configurable values.

In a possible implementation, the first node may request the second node to allocate a spatial multiplexing slot, to be specific, request to allocate a slot in which the first node can transmit the data to the second node and the fifth node simultaneously. Then, the second node configures the second spatial multiplexing slot for the first node, and may simultaneously configure, for the second spatial multiplexing slot, the second reference signal that is used for interference measurement. In this implementation, the second reference signal and the second spatial multiplexing slot are simultaneously configured, and the correspondence between the second reference signal and the second spatial multiplexing slot may be directly obtained.

Certainly, the second node may alternatively separately configure the second reference signal and the second spatial multiplexing slot, and then indicate the correspondence between the second reference signal and the second spatial multiplexing slot by using the foregoing signaling or the manner specified in the protocol.

In addition, when requesting to allocate the second spatial multiplexing slot, the first node may also request to allocate the first spatial multiplexing slots in one request message, or may request to allocate the first spatial multiplexing slot separately by using two requests. In this embodiment of this application, a quantity of spatial multiplexing slots that the first node requests to allocate in one request message is not specifically limited.

As described above, the channel measurement result of the second reference signal is not always the same. For example, the result of the second reference signal may indicate that data transmission between the first node and the fifth node has relatively weak interference to data transmission on an uplink backhaul link (between the first node and the second node), or may indicate that data transmission between the first node and the fifth node has relatively strong interference to data transmission on an uplink backhaul link (between the first node and the second node). In this case, the second node may use different processing manners based on different channel measurement results.

For example, the second node may configure an uplink transmission parameter for the first node based on the measurement result, and the first node may subsequently transmit the data to the second node based on the configured uplink transmission parameter, and simultaneously transmit the data to the fifth node. For another example, the second node may send a second indication message to the first node based on the measurement result, to indicate the first node not to communicate with the fifth node in the second spatial multiplexing slot. For another example, the second node may send a fourth indication message to the first node based on the measurement result, to indicate the first node not to communicate with the fifth node.

With reference to the foregoing channel measurement performed by the second node on the first reference signal, after performing channel measurement on both the first reference signal and the second reference signal, the second node may indicate, based on the channel measurement result of the first reference signal and the channel measurement result of the second reference signal, whether the third node and the fifth node can communicate with the first node.

For example, as shown in FIG. 10, after performing channel measurement on an interference measurement SRS 1 (an example of the first reference signal) and an interference measurement SRS 2 (an example of the second reference signal), the second node indicates that the first node may send the fifth data signal to the second node in the second spatial multiplexing slot corresponding to the interference measurement SRS 2, simultaneously send the third data signal to the fifth node in spatial multiplexing mode, and indicates that the first node cannot communicate with the second node and the third node simultaneously in the first spatial multiplexing slot corresponding to the interference measurement SRS 1. Same analog and digital precoding is used when the interference measurement SRS 2 is sent and the third data signal is transmitted. The third data signal and the fifth data signal are transmitted in spatial multiplexing mode. In other words, the third data signal and the fifth data signal are simultaneously transmitted.

The first spatial multiplexing slot and the second spatial multiplexing slot may be different slots, or may be a same slot.

In a possible implementation, after configuring the information about the resources for the foregoing two reference signals (namely, the first reference signal and the second reference signal) and performing the channel measurement on the two reference signals, the second node may select, by using an instruction (for example, a scheduling instruction), a data signal corresponding to at most one of the reference signals (for example, the first data signal or the second data signal) and transmit the data signal. This implementation may also be extended to a scenario in which there are more reference signals. For example, the N reference signals configured by the second node correspond to one spatial multiplexing slot, and the second node selects, by using an instruction (for example, a scheduling instruction), a data signal corresponding to at most one of the reference signals and transmits the data signal.

In a possible implementation, the configuration of the two reference signals is still used as an example. If the first node does not receive a scheduling instruction from the second node, the first node may send the first data signal to the third node while sending the fourth data signal to the second node, or may send the third data signal to the fifth node while sending the fifth data signal to the second node; or if the first node receives a scheduling instruction from the second node, the first node determines, based on the scheduling instruction, whether to transmit the data to the third node or the fifth node.

In another possible implementation, after performing the channel measurement on the first reference signal, the second node may also select whether to schedule the first node to transmit the data to the second node. To be specific, in the first spatial multiplexing slot corresponding to the first reference signal, the first node may not be scheduled by the second node. In other words, the first node may not send the fourth data signal to the second node in the first spatial multiplexing slot. Similarly, after performing the channel measurement on the second reference signal, the second node may also select whether to schedule the first node to transmit the data to the second node. To be specific, in the second spatial multiplexing slot corresponding to the second reference signal, the first node may not be scheduled by the second node. In other words, the first node may not send the fifth data signal to the second node in the second spatial multiplexing slot.

In conclusion, according to the reference signal transmission method provided in this embodiment of this application, the first port through which the first node sends the first reference signal to the second node and the second port through which the first node transmits the first data signal to the third node are the same port or meet the antenna port QCL relationship. Therefore, the first node sends the first reference signal through the first port. To be specific, a situation in which the first node transmits the data to the third node through the second port when the first node transmits the data to the second node and the third node simultaneously (where for example, the first node transmits the data to the second node and the third node simultaneously in SDMA mode) may be simulated. The second node performs the channel measurement on the received first reference signal, to determine the interference caused by the data signal subsequently transmitted by the first node to the third node to the data signal transmitted by the first node to the second node. Therefore, the second node may configure an uplink transmission parameter such as an MCS for the first node based on the channel measurement result of the first reference signal; and the first node may send the fourth data signal to the second node based on the configured uplink transmission parameter, and send the first data signal to the third node through the second port. Because the interference from the first data signal to the fourth data signal has been considered in the uplink transmission parameter configured by the second node for the first node, the first node sends the first data signal while sending the fourth data signal based on the uplink transmission parameter configured by the second node. This not only can improve spectral efficiency, but also reduce a block error rate of uplink data transmission.

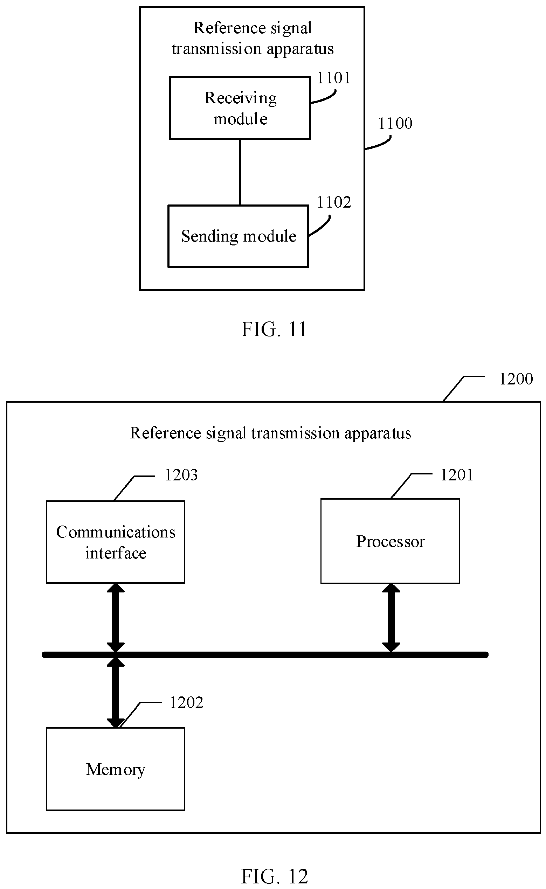

Based on a same inventive concept, an embodiment of this application further provides a reference signal transmission apparatus 1100. The apparatus may be configured to perform a method performed by the first node in the method shown in FIG. 5. Referring to FIG. 11, the reference signal transmission apparatus 1100 includes a receiving module 1101 and a sending module 1102. The receiving module 1101 is configured to receive a first configuration message sent by a second node. The first configuration message carries information about a resource for transmitting a first reference signal.

The sending module 1102 is configured to send the first reference signal through a first port based on the first configuration message.

The sending module 1102 is further configured to send a first data signal to a third node through a second port.

The first port and the second port are a same port or have an antenna port quasi co-location QCL relationship, the apparatus is a relay node, and the second node is an upper node of the apparatus.

The first reference signal includes but is not limited to an SRS and a CSI-RS.

Optionally, a transmit power of the first reference signal is the same as a transmit power of the first data signal; or a difference between a transmit power of the first reference signal and a transmit power of the first data signal is a specified value.

Optionally, the first configuration message is further used to indicate a correspondence between the first reference signal and a first spatial multiplexing slot for transmitting the first data signal.

In an implementation, the first configuration message may further carry information about a resource for transmitting a second reference signal. In this case, the sending module 1102 is further configured to: send the second reference signal through a third port based on the first configuration message; and send a third data signal to a fifth node through a fourth port. The third port and the fourth port are a same port or have an antenna port QCL relationship.

In the foregoing implementation, the first configuration message is further used to indicate a correspondence between the second reference signal and a second spatial multiplexing slot for transmitting the third data signal.

It should be noted that, in the embodiments of this application, division into the modules is an example, and is merely logical function division. During actual implementation, another division manner may be used. Function modules in the embodiments of this application may be integrated into one processing module, or each of the modules may exist alone physically, or two or more modules are integrated into one module. The integrated module may be implemented in a form of hardware, or may be implemented in a form of a software function module.

When the integrated module is implemented in a form of a software function module and sold or used as an independent product, the integrated module may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, a network device, or the like) or a processor (processor) to perform all or some of the steps of the methods described in the embodiments of this application. The foregoing storage medium includes: any medium that can store program code, such as a USB flash drive, a removable hard disk, a read-only memory (, ROM), a random access memory (, RAM), a magnetic disk, or an optical disc.

It should also be noted that the reference signal transmission apparatus 1100 may be configured to perform the method performed by the first node in the reference signal transmission method shown in FIG. 5. For an implementation and a technical effect of the implementation that are not described in detail in the reference signal transmission apparatus 1100, refer to related descriptions in the reference signal transmission method shown in FIG. 5.

Based on a same inventive concept, an embodiment of this application further provides a reference signal transmission apparatus 1200. The apparatus may be configured to perform a method performed by the first node in the reference signal transmission method shown in FIG. 5, or may be an apparatus the same as the reference signal transmission apparatus 1100.

Referring to FIG. 12, the apparatus 1200 includes at least one processor 1201, configured to implement a function of the first node in the reference signal transmission method provided in the embodiments of this application. The apparatus 1200 may further include at least one memory 1202, configured to store a program instruction and/or data. The memory 1202 is coupled to the processor 1201. The processor 1201 may cooperate with the memory 1202. The processor 1201 may execute the program instruction stored in the memory 1202. At least one of the at least one memory 1202 may be included in the processor 1201.

The apparatus 1200 may further include a communications interface 1203, and the apparatus 1200 may exchange information with another device via the communications interface 1203. The communications interface 1203 may be a circuit, a bus, a transceiver, or any other apparatus that can be configured to exchange information. For example, the another device may be a base station, UE, or a relay node. The processor 1201 may receive and send data via the communications interface 1203. For example, the communications interface 1203 is configured to: receive data from a second node, and send data to the second node.

In this embodiment of this application, a specific connection medium among the communications interface 1203, the processor 1201, and the memory 1202 is not limited. In this embodiment of this application, in FIG. 12, the memory 1202, the processor 1201, and the communications interface 1203 are connected by using a bus. The bus is indicated by using a bold line in FIG. 12. A connection manner between other components is merely an example for description, and is not limited thereto. The bus may be classified into an address bus, a data bus, a control bus, and the like. For ease of representation, only one bold line is used to represent the bus in FIG. 12, but this does not mean that there is only one bus or only one type of bus.

An embodiment of this application further provides a chip. The chip includes the foregoing communications interface and the foregoing processor, and is configured to support the apparatus 1200 in implementing any method performed by the first node in the method in the embodiment shown in FIG. 5.

An embodiment of this application further provides a computer-readable storage medium, configured to store a computer software instruction that needs to be executed for executing the foregoing processor. The computer-readable storage medium includes a program that needs to be executed for executing the foregoing processor.

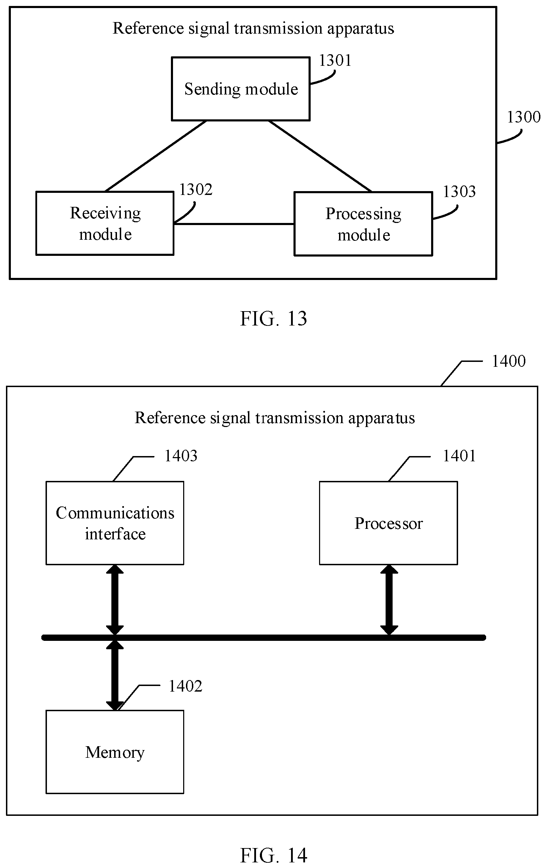

Based on a same inventive concept, an embodiment of this application further provides a reference signal transmission apparatus 1300. The apparatus may be configured to perform a method performed by the second node in the method shown in FIG. 5. Referring to FIG. 13, the reference signal transmission apparatus 1300 includes a sending module 1301, a receiving module 1302, and a processing module 1303. The sending module 1301 is configured to send a first configuration message to a first node. The first configuration message carries information about a resource for transmitting a first reference signal.

The receiving module 1302 is configured to receive the first reference signal sent by the first node through a first port based on the first configuration message. The first port and a second port are a same port or have an antenna port quasi co-location QCL relationship, the second port is a port through which the first node sends a first data signal to a third node, the first node is a relay node, and the apparatus 1300 is an upper node of the first node.

The processing module 1303 is configured to perform channel measurement on the first reference signal.

The first reference signal includes but is not limited to an SRS and a CSI-RS.

Optionally, the first configuration message is further used to indicate a correspondence between the first reference signal and a first spatial multiplexing slot for transmitting the first data signal.

In an implementation, the first configuration message carries information about a resource for transmitting a second reference signal. In this case, the receiving module 1302 is further configured to: receive the second reference signal sent by the first node through a third port based on the first configuration message, where the third port and a fourth port are a same port or have an antenna port quasi co-location QCL relationship, and the fourth port is a port through which the first node sends a third data signal to a fifth node; and the processing module 1303 is further configured to perform channel measurement on the second reference signal.

It should be noted that the reference signal transmission apparatus 1300 may be configured to perform the method performed by the second node in the reference signal transmission method shown in FIG. 5. For an implementation and a technical effect of the implementation that are not described in detail in the reference signal transmission apparatus 1300, refer to related descriptions in the reference signal transmission method shown in FIG. 5.

Based on a same inventive concept, an embodiment of this application further provides a reference signal transmission apparatus 1400. The apparatus may be configured to perform a method performed by the second node in the reference signal transmission method shown in FIG. 5, or may be an apparatus the same as the reference signal transmission apparatus 1300.

Referring to FIG. 14, the apparatus 1400 includes at least one processor 1401, configured to implement a function of the second node in the reference signal transmission method provided in the embodiments of this application. The apparatus 1400 may further include at least one memory 1402, configured to store a program instruction and/or data. The memory 1402 is coupled to the processor 1401. The processor 1401 may cooperate with the memory 1402. The processor 1401 may execute the program instruction stored in the memory 1402. At least one of the at least one memory 1402 may be included in the processor 1401.

The apparatus 1400 may further include a communications interface 1403, and the apparatus 1400 may exchange information with another device via the communications interface 1403. The communications interface 1403 may be a circuit, a bus, a transceiver, or any other apparatus that can be configured to exchange information. For example, the another device may be a base station, UE, or a relay node. The processor 1401 may receive and send data via the communications interface 1403. For example, the communications interface 1403 is configured to: receive data from a first node, and send data to the second node.

In this embodiment of this application, a specific connection medium among the communications interface 1403, the processor 1401, and the memory 1402 is not limited. In this embodiment of this application, in FIG. 14, the memory 1402, the processor 1401, and the communications interface 1403 are connected by using a bus. The bus is indicated by using a bold line in FIG. 14. A connection manner between other components is merely an example for description, and is not limited thereto. The bus may be classified into an address bus, a data bus, a control bus, and the like. For ease of representation, only one bold line is used to represent the bus in FIG. 14, but this does not mean that there is only one bus or only one type of bus.

An embodiment of this application further provides a chip. The chip includes the foregoing communications interface and the foregoing processor, and is configured to support the apparatus 1400 in implementing any method performed by the second node in the method in the embodiment shown in FIG. 5.

An embodiment of this application further provides a computer-readable storage medium, configured to store a computer software instruction that needs to be executed for executing the foregoing processor. The computer-readable storage medium includes a program that needs to be executed for executing the foregoing processor.

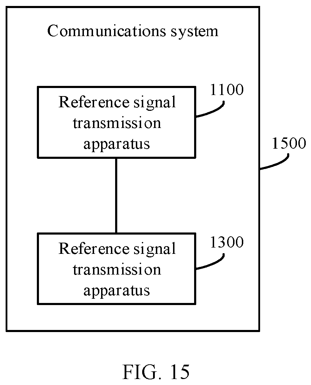

In addition, an embodiment of this application further provides a communications system 1500. As shown in FIG. 15, the communications system 1500 includes the reference signal transmission apparatus 1100 and the reference signal transmission apparatus 1300.

This application is described with reference to the flowcharts and/or block diagrams of the method, the device (system), and the computer program product according to this application. It should be understood that the computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims.

All or some of the foregoing embodiments may be implemented by using software, hardware, firmware, or any combination thereof. When software is used to implement the embodiments, all or some of the embodiments may be implemented in a form of a computer program product. The computer program product includes one or more computer program instructions. When the computer program instructions are loaded and executed on a computer, the procedure or functions according to the embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

## Claims

1. A reference signal transmission method, comprising:
receiving (S501), by a first node, a first configuration message sent by a second node, wherein the first configuration message carries information about a resource for transmitting a first reference signal;
sending (S502), by the first node, the first reference signal through a first port based on the first configuration message; wherein
the second node performs a channel measurement on the first reference signal, and
sending (S504), by the first node, a first data signal to a third node through a second port subsequently to the channel measurement, wherein
the first node sends the first data signal to a third node and simultaneously sends a fourth data signal to the second node, and
the second node configures an uplink transmission parameter based on the channel measurement of the first reference signal and the first node sends the fourth data signal to the second node based on the configured uplink transmission parameter,
the first port and the second port are a same port or have an antenna port quasi co-location, QCL, relationship, the first node is a relay node, and the second node is an upper node of the first node.

2. The method according to claim 1, wherein the first reference signal is a sounding reference signal SRS.

3. The method according to claim 1 or 2, wherein a transmit power of the first reference signal is the same as a transmit power of the first data signal; or
a difference between a transmit power of the first reference signal and a transmit power of the first data signal is a specified value.

4. The method according to any one of claims 1 to 3, wherein the first configuration message is further used to indicate a correspondence between the first reference signal and a first spatial multiplexing slot for transmitting the first data signal.

5. A reference signal transmission method, comprising:
sending (S501), by a second node, a first configuration message to a first node, wherein the first configuration message carries information about a resource for transmitting a first reference signal;
receiving (S502), by the second node, the first reference signal sent by the first node through a first port based on the first configuration message,
performing (S503), by the second node, channel measurement on the first reference signal,
wherein the first port and a second port are a same port or have an antenna port quasi co-location, QCL, relationship, the second port is a port through which the first node sends a first data signal to a third node subsequently to the channel measurement, the first node is a relay node, the second node is an upper node of the first node, the first node sends the first data signal to a third node and simultaneously sends a fourth data signal to the second node, and the second node configures an uplink transmission parameter based on the channel measurement of the first reference signal and the first node sends the fourth data signal to the second node based on the configured uplink transmission parameter.

6. A system comprising
a reference signal transmission apparatus (1100), being a first node, comprising:
a receiving module (1101), configured to receive a first configuration message sent by a second node, wherein the first configuration message carries information about a resource for transmitting a first reference signal; and
a sending module (1102), configured to send the first reference signal through a first port based on the first configuration message,
wherein the second node is configured to perform channel measurement on the first reference signal, wherein
the sending module (1102) is further configured to send a first data signal to a third node through a second port subsequently to the channel measurement, wherein
the first port and the second port are a same port or have an antenna port quasi co-location, QCL, relationship, the apparatus (1100) is a relay node, and the second node is an upper node of the apparatus (1100), the first node sends the first data signal to a third node and simultaneously sends a fourth data signal to the second node, and the second node configures an uplink transmission parameter based on the channel measurement of the first reference signal and the first node sends the fourth data signal to the second node based on the configured uplink transmission parameter, and
a further reference signal transmission apparatus (1300), being the second node, comprising:
a sending module (1301), configured to send the first configuration message to the first node;
a receiving module (1302), configured to receive the first reference signal sent by the first node through the first port based on the first configuration message, and
a processing module (1303), configured to perform channel measurement on the first reference signal,
wherein the second port is a port through which the first node sends the first data signal to the third node, the first node is the relay node, and the further apparatus (1300) is the upper node of the first node.

7. The system according to claim 6, wherein the first reference signal is a sounding reference signal, SRS.

8. The system according to claim 6 or 7, wherein a transmit power of the first reference signal is the same as a transmit power of the first data signal; or
a difference between a transmit power of the first reference signal and a transmit power of the first data signal is a specified value.

9. The system according to any one of claims 6 to 8, wherein the first configuration message is further used to indicate a correspondence between the first reference signal and a first spatial multiplexing slot for transmitting the first data signal.

10. The system according to any one of claims 6 to 9, wherein the first configuration message carries information about a resource for transmitting a second reference signal; and
the sending module (1102) is further configured to:
send the second reference signal through a third port based on the first configuration message; and
send a third data signal to a fifth node through a fourth port, wherein the third port and the fourth port are a same port or have an antenna port QCL relationship.

11. The system according to claim 10, wherein the first configuration message is further used to indicate a correspondence between the second reference signal and a second spatial multiplexing slot for transmitting the third data signal.

12. The system according to any one of claims 6 to 11, wherein the first configuration message is further used to indicate a correspondence between the first reference signal and a first spatial multiplexing slot for transmitting the first data signal.

13. The system according to any one of claims 6 to 12, wherein the first configuration message carries information about a resource for transmitting a second reference signal; and
the receiving module (1302) is further configured to:
receive the second reference signal sent by the first node through a third port based on the first configuration message, wherein the third port and a fourth port are a same port or have an antenna port quasi co-location, QCL, relationship, and the fourth port is a port through which the first node sends a third data signal to a fifth node; and
the processing module (1303) is further configured to:
perform channel measurement on the second reference signal.

## Patentansprüche

1. Referenzsignalübertragungsverfahren, das umfasst:
Empfangen (S501), durch einen ersten Knoten, einer ersten Konfigurationsnachricht, die durch einen zweiten Knoten gesendet wird, wobei die erste Konfigurationsnachricht Informationen über eine Ressource zum Übertragen eines ersten Referenzsignals trägt;
Senden (S502), durch den ersten Knoten, des ersten Referenzsignals über einen ersten Port basierend auf der ersten Konfigurationsnachricht; wobei
der zweite Knoten eine Kanalmessung an dem ersten Referenzsignal durchführt, und Senden (S504), durch den ersten Knoten, eines ersten Datensignals an einen dritten Knoten über einen zweiten Port im Anschluss an die Kanalmessung, wobei
der erste Knoten das erste Datensignal an einen dritten Knoten sendet und gleichzeitig ein viertes Datensignal an den zweiten Knoten sendet, und
der zweite Knoten einen Uplink-Übertragungsparameter basierend auf der Kanalmessung des ersten Referenzsignals konfiguriert und der erste Knoten das vierte Datensignal basierend auf dem konfigurierten Uplink-Übertragungsparameter an den zweiten Knoten sendet,
der erste Port und der zweite Port ein gleicher Port sind oder eine Quasi-Colocation(QCL)-Beziehung eines Antennenports aufweisen, der erste Knoten ein Relaisknoten ist und der zweite Knoten ein oberer Knoten des ersten Knotens ist.

2. Verfahren nach Anspruch 1, wobei das erste Referenzsignal ein Sondierungsreferenzsignal (SRS) ist.

3. Verfahren nach Anspruch 1 oder 2, wobei eine Übertragungsleistung des ersten Referenzsignals die gleiche wie eine Übertragungsleistung des ersten Datensignals ist; oder
ein Unterschied zwischen einer Übertragungsleistung des ersten Referenzsignals und einer Übertragungsleistung des ersten Datensignals ein spezifizierter Wert ist.

4. Verfahren nach einem der Ansprüche 1 bis 3, wobei die erste Konfigurationsnachricht ferner verwendet wird, um eine Entsprechung zwischen dem ersten Referenzsignal und einem ersten räumlichen Multiplexing-Slot zum Übertragen des ersten Datensignals anzuzeigen.

5. Referenzsignalübertragungsverfahren, das umfasst:
Senden (S501), durch einen zweiten Knoten, einer ersten Konfigurationsnachricht an einen ersten Knoten, wobei die erste Konfigurationsnachricht Informationen über eine Ressource zum Übertragen eines ersten Referenzsignals trägt;
Empfangen (S502), durch den zweiten Knoten, des ersten Referenzsignals, das durch den ersten Knoten über einen ersten Port basierend auf der ersten Konfigurationsnachricht gesendet wird,
Durchführen (S503), durch den zweiten Knoten, der Kanalmessung an dem ersten Referenzsignal,
wobei der erste Port und ein zweiter Port ein gleicher Port sind oder eine Quasi-Colocation(QCL)-Beziehung des Antennenports aufweisen, der zweite Port ein Port ist, über den der erste Knoten ein erstes Datensignal an einen dritten Knoten im Anschluss an die Kanalmessung sendet, der erste Knoten ein Relaisknoten ist, der zweite Knoten ein oberer Knoten des ersten Knotens ist, der erste Knoten das erste Datensignal an einen dritten Knoten sendet und gleichzeitig ein viertes Datensignal an den zweiten Knoten sendet, und der zweite Knoten einen Uplink-Übertragungsparameter basierend auf der Kanalmessung des ersten Referenzsignals konfiguriert und der erste Knoten das vierte Datensignal an den zweiten Knoten basierend auf dem konfigurierten Uplink-Übertragungsparameter sendet.

6. System, das umfasst:
eine Referenzsignalübertragungseinrichtung (1100), die ein erster Knoten ist, die umfasst:
ein Empfangsmodul (1101), das konfiguriert ist, um eine erste Konfigurationsnachricht, die durch einen zweiten Knoten gesendet wird, zu empfangen, wobei die erste Konfigurationsnachricht Informationen über eine Ressource zum Übertragen eines ersten Referenzsignals trägt; und
ein Sendemodul (1102), das konfiguriert ist, um das erste Referenzsignal über einen ersten Port basierend auf der ersten Konfigurationsnachricht zu senden,
wobei der zweite Knoten konfiguriert ist, um die Kanalmessung an dem ersten Referenzsignal durchzuführen, wobei
das Sendemodul (1102) ferner konfiguriert ist, um ein erstes Datensignal an einen dritten Knoten über einen zweiten Port im Anschluss an die Kanalmessung zu senden, wobei
der erste Port und der zweite Port ein gleicher Port sind oder eine Quasi-Colocation(QCL)-Beziehung des Antennenports aufweisen, die Einrichtung (1100) ein Relaisknoten ist und der zweite Knoten ein oberer Knoten der Einrichtung (1100) ist, der erste Knoten das erste Datensignal an einen dritten Knoten sendet und gleichzeitig ein viertes Datensignal an den zweiten Knoten sendet, und der zweite Knoten einen Uplink-Übertragungsparameter basierend auf der Kanalmessung des ersten Referenzsignals konfiguriert und der erste Knoten das vierte Datensignal an den zweiten Knoten basierend auf dem konfigurierten Uplink-Übertragungsparameter sendet, und
eine weitere Referenzsignalübertragungseinrichtung (1300), die der zweite Knoten ist, die umfasst
ein Sendemodul (1301), das konfiguriert ist, um die erste Konfigurationsnachricht an den ersten Knoten zu senden;
ein Empfangsmodul (1302), das konfiguriert ist, um das erste Referenzsignal, das durch den ersten Knoten über den ersten Port basierend auf der ersten Konfigurationsnachricht gesendet wird, zu empfangen, und
ein Verarbeitungsmodul (1303), das konfiguriert ist, um die Kanalmessung an dem ersten Referenzsignal durchzuführen,
wobei der zweite Port ein Port, über den der erste Knoten das erste Datensignal an den dritten Knoten sendet, ist, der erste Knoten der Relaisknoten ist und die weitere Einrichtung (1300) der obere Knoten des ersten Knotens ist.

7. System nach Anspruch 6, wobei das erste Referenzsignal ein Sondierungsreferenzsignal (SRS) ist.

8. System nach Anspruch 6 oder 7, wobei eine Übertragungsleistung des ersten Referenzsignals die gleiche wie eine Übertragungsleistung des ersten Datensignals ist; oder
ein Unterschied zwischen einer Übertragungsleistung des ersten Referenzsignals und einer Übertragungsleistung des ersten Datensignals ein spezifizierter Wert ist.

9. System nach einem der Ansprüche 6 bis 8, wobei die erste Konfigurationsnachricht ferner verwendet wird, um eine Entsprechung zwischen dem ersten Referenzsignal und einem ersten räumlichen Multiplexing-Slot zum Übertragen des ersten Datensignals anzuzeigen.

10. System nach einem der Ansprüche 6 bis 9, wobei die erste Konfigurationsnachricht Informationen über eine Ressource zum Übertragen eines zweiten Referenzsignals trägt; und
das Sendemodul (1102) ferner konfiguriert ist zum:
Senden des zweiten Referenzsignals über einen dritten Port basierend auf der ersten Konfigurationsnachricht; und
Senden eines dritten Datensignals an einen fünften Knoten über einen vierten Port, wobei der dritte Port und der vierte Port ein gleicher Port sind oder eine QCL-Beziehung des Antennenports aufweisen.

11. System nach Anspruch 10, wobei die erste Konfigurationsnachricht ferner verwendet wird, um eine Entsprechung zwischen dem zweiten Referenzsignal und einem zweiten räumlichen Multiplexing-Slot zum Übertragen des dritten Datensignals anzuzeigen.

12. System nach einem der Ansprüche 6 bis 11, wobei die erste Konfigurationsnachricht ferner verwendet wird, um eine Entsprechung zwischen dem ersten Referenzsignal und einem ersten räumlichen Multiplexing-Slot zum Übertragen des ersten Datensignals anzuzeigen.

13. System nach einem der Ansprüche 6 bis 12, wobei die erste Konfigurationsnachricht Informationen über eine Ressource zum Übertragen eines zweiten Referenzsignals trägt; und
das Empfangsmodul (1302) ferner konfiguriert ist zum:
Empfangen des zweiten Referenzsignals, das durch den ersten Knoten über einen dritten Port basierend auf der ersten Konfigurationsnachricht gesendet wird, wobei der dritte Port und ein vierter Port ein gleicher Port sind oder eine Quasi-Colocation(QCL)-Beziehung des Antennenports aufweisen, und der vierte Port ein Port, über den der erste Knoten ein drittes Datensignal an einen fünften Knoten sendet, ist; und
das Verarbeitungsmodul (1303) ferner konfiguriert ist zum:
Durchführen der Kanalmessung an dem zweiten Referenzsignal.

## Revendications

1. Procédé de transmission de signal de référence, comprenant :
la réception (S501), par un premier nœud, d'un premier message de configuration envoyé par un deuxième nœud, dans lequel le premier message de configuration transporte des informations concernant une ressource permettant de transmettre un premier signal de référence ;
l'envoi (S502), par le premier nœud, du premier signal de référence par l'intermédiaire d'un premier port sur la base du premier message de configuration ; dans lequel le deuxième nœud réalise une mesure de canal sur le premier signal de référence, et l'envoi (S504), par le premier nœud, d'un premier signal de données à un troisième nœud par l'intermédiaire d'un deuxième port ultérieurement à la mesure de canal,
dans lequel
le premier nœud envoie le premier signal de données à un troisième nœud et envoie simultanément un quatrième signal de données au deuxième nœud, et
le deuxième nœud configure un paramètre de transmission de liaison montante sur la base de la mesure de canal du premier signal de référence et le premier nœud envoie le quatrième signal de données au deuxième nœud sur la base du paramètre de transmission de liaison montante configuré,
le premier port et le deuxième port sont un même port ou ont une relation de quasi-colocalisation, QCL, de port d'antenne le premier nœud est un nœud de relais, et le deuxième nœud est un nœud supérieur du premier nœud.

2. Procédé selon la revendication 1, dans lequel le premier signal de référence est un signal de référence de sondage, SRS.

3. Procédé selon la revendication 1 ou 2, dans lequel une puissance de transmission du premier signal de référence est la même qu'une puissance de transmission du premier signal de données ; ou
une différence entre une puissance de transmission du premier signal de référence et une puissance de transmission du premier signal de données est une valeur spécifiée.

4. Procédé selon l'une quelconque des revendications 1 à 3, dans lequel le premier message de configuration est en outre utilisé pour indiquer une correspondance entre le premier signal de référence et un premier créneau de multiplexage spatial permettant de transmettre le premier signal de données.

5. Procédé de transmission de signal de référence, comprenant :
l'envoi (S501), par un deuxième nœud, d'un premier message de configuration à un premier nœud, dans lequel le premier message de configuration transporte des informations concernant une ressource permettant de transmettre un premier signal de référence ;
la réception (S502), par le deuxième nœud, du premier signal de référence envoyé par le premier nœud par l'intermédiaire d'un premier port sur la base du premier message de configuration,
la réalisation (S503), par le deuxième nœud, d'une mesure de canal sur le premier signal de référence,
dans lequel le premier port et un deuxième port sont un même port ou ont une relation de quasi-colocalisation, QCL, de port d'antenne, le deuxième port est un port par l'intermédiaire duquel le premier nœud envoie un premier signal de données à un troisième nœud ultérieurement à la mesure de canal, le premier nœud est un nœud de relais, le deuxième nœud est un nœud supérieur du premier nœud, le premier nœud envoie le premier signal de données à un troisième nœud et envoie simultanément un quatrième signal de données au deuxième nœud, et le deuxième nœud configure un paramètre de transmission de liaison montante sur la base de la mesure de canal du premier signal de référence et le premier nœud envoie le quatrième signal de données au deuxième nœud sur la base du paramètre de transmission de liaison montante configuré.

6. Système comprenant
un appareil de transmission de signal de référence (1100), étant un premier nœud, comprenant :
un module de réception (1101), configuré pour recevoir un premier message de configuration envoyé par un deuxième nœud, dans lequel le premier message de configuration transporte des informations concernant une ressource permettant de transmettre un premier signal de référence ; et
un module d'envoi (1102), configuré pour envoyer le premier signal de référence par l'intermédiaire d'un premier port sur la base du premier message de configuration,
dans lequel le deuxième nœud est configuré pour réaliser une mesure de canal sur le premier signal de référence, dans lequel
le module d'envoi (1102) est en outre configuré pour envoyer un premier signal de données à un troisième nœud par l'intermédiaire d'un deuxième port ultérieurement à la mesure de canal, dans lequel
le premier port et le deuxième port sont un même port ou ont une relation de quasi-colocalisation, QCL, de port d'antenne, l'appareil (1100) est un nœud de relais, et le deuxième nœud est un nœud supérieur de l'appareil (1100), le premier nœud envoie le premier signal de données à un troisième nœud et envoie simultanément un quatrième signal de données au deuxième nœud, et le deuxième nœud configure un paramètre de transmission de liaison montante sur la base de la mesure de canal du premier signal de référence et le premier nœud envoie le quatrième signal de données au deuxième nœud sur la base du paramètre de transmission de liaison montante configuré, et
un appareil de transmission de signal de référence supplémentaire (1300), étant le deuxième nœud, comprenant
un module d'envoi (1301), configuré pour envoyer le premier message de configuration au premier nœud ;
un module de réception (1302), configuré pour recevoir le premier signal de référence envoyé par le premier nœud par l'intermédiaire du premier port sur la base du premier message de configuration, et
un module de traitement (1303), configuré pour réaliser une mesure de canal sur le premier signal de référence,
dans lequel le deuxième port est un port par l'intermédiaire duquel le premier nœud envoie le premier signal de données au troisième nœud, le premier nœud est le nœud de relais, et l'appareil supplémentaire (1300) est le nœud supérieur du premier nœud.

7. Système selon la revendication 6, dans lequel le premier signal de référence est un signal de référence de sondage, SRS.

8. Système selon la revendication 6 ou 7, dans lequel une puissance de transmission du premier signal de référence est la même qu'une puissance de transmission du premier signal de données ; ou
une différence entre une puissance de transmission du premier signal de référence et une puissance de transmission du premier signal de données est une valeur spécifiée.

9. Système selon l'une quelconque des revendications 6 à 8, dans lequel le premier message de configuration est en outre utilisé pour indiquer une correspondance entre le premier signal de référence et un premier créneau de multiplexage spatial permettant de transmettre le premier signal de données.

10. Système selon l'une quelconque des revendications 6 à 9, dans lequel le premier message de configuration transporte des informations concernant une ressource permettant de transmettre un second signal de référence ; et
le module d'envoi (1102) est outre configuré pour :
envoyer le second signal de référence par l'intermédiaire d'un troisième port sur la base du premier message de configuration ; et
envoyer un troisième signal de données à un cinquième nœud par l'intermédiaire d'un quatrième port, dans lequel le troisième port et le quatrième port sont un même port ou ont une relation QCL de port d'antenne.

11. Système selon la revendication 10, dans lequel le premier message de configuration est en outre utilisé pour indiquer une correspondance entre le second signal de référence et un second créneau de multiplexage spatial permettant de transmettre le troisième signal de données.

12. Système selon l'une quelconque des revendications 6 à 11, dans lequel le premier message de configuration est en outre utilisé pour indiquer une correspondance entre le premier signal de référence et un premier créneau de multiplexage spatial permettant de transmettre le premier signal de données.

13. Système selon l'une quelconque des revendications 6 à 12, dans lequel le premier message de configuration transporte des informations concernant une ressource permettant de transmettre un second signal de référence ; et
le module de réception (1302) est en outre configuré pour :
recevoir le second signal de référence envoyé par le premier nœud par l'intermédiaire d'un troisième port sur la base du premier message de configuration, dans lequel le troisième port et un quatrième port sont un même port ou ont une relation de quasi-colocalisation, QCL, de port d'antenne, et le quatrième port est un port par l'intermédiaire duquel le premier nœud envoie un troisième signal de données à un cinquième nœud ; et
le module de traitement (1303) est en outre configuré pour :
réaliser une mesure de canal sur le second signal de référence.
